(19) Europäisches Patentamt
European Patent Office
Office européen des brevets

(11) EP 1 757 624 B1

(12) **EUROPEAN PATENT SPECIFICATION**

(45) Date of publication and mention of the grant of the patent:
**10.03.2010 Bulletin 2010/10**

(21) Application number: **05770804.2**

(22) Date of filing: **11.08.2005**

(51) Int Cl.:
***C08F 2/22*** *(2006.01)* ***C08F 18/08*** *(2006.01)*
***C09J 131/04*** *(2006.01)* ***C09J 151/06*** *(2006.01)*

(86) International application number:
**PCT/JP2005/014717**

(87) International publication number:
**WO 2006/022147 (02.03.2006 Gazette 2006/09)**

# (54) VINYL ACETATE RESIN EMULSION AND METHOD FOR PRODUCING SAME

VINYLACETAT-HARZEMULSION UND VERFAHREN ZU DEREN HERSTELLUNG

EMULSION DE RESINE D'ACETATE DE VINYL ET PROCEDE SERVANT A PRODUIRE CELLE-CI

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **27.08.2004 JP 2004248759**

(43) Date of publication of application:
**28.02.2007 Bulletin 2007/09**

(73) Proprietors:
- **KONISHI CO., LTD.**
  **Osaka-shi,**
  **Osaka-fu 541-0045 (JP)**
- **Kuraray Co., Ltd.**
  **Okayama-ken (JP)**

(72) Inventors:
- **ORIGUCHI, Toshiki**
  **Sakai-shi Osaka 5998233 (JP)**
- **IKEMURA, Yuji**
  **Yodogawa-ku, Osaka-shi Osaka 5320027 (JP)**
- **MAKI, Hideki**
  **7091122 (JP)**

(74) Representative: **Grünecker, Kinkeldey, Stockmair & Schwanhäusser**
**Anwaltssozietät**
**Leopoldstrasse 4**
**80802 München (DE)**

(56) References cited:

| | |
|---|---|
| **EP-A- 0 924 229** | **EP-A- 1 081 161** |
| **GB-A- 1 305 481** | **JP-A- 11 092 734** |
| **JP-A- 2000 239 307** | **JP-A- 2000 302 809** |
| **JP-A- 2001 220 484** | **JP-A- 2004 189 891** |
| **JP-A- 2004 189 891** | **JP-A- 2004 217 724** |

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to poly(vinyl acetate) emulsions useful typically as adhesives, base materials for paints, and coating agents, production methods thereof, and aqueous or water-based adhesives containing the poly (vinyl acetate) emulsions

### Background Art

Poly(vinyl acetate) emulsions have been widely used as, for example, adhesives for woodworking, paper coating or converting, or textile processing; base materials for paints; and coating agents. These emulsions, however, inherently have high minimum film-forming temperatures, and many of them must be combined with film-forming aids such as volatile plasticizers and organic solvents. Examples of the plasticizers include phthalic esters. However, demands to avoid environmental issues have increased recently, and such phthalic esters are pointed out to be undesirable to the environment. Thus, attempts have been made to substitute the phthalic esters typically with safe plasticizers. Plasticizers, however, are essentially volatile organic compound (VOC) components. Among them, VOC components contained in adhesives for housing are suspected to cause new house syndrome (sick house syndrome). The VOC problems caused by plasticizers are also pointed out even in aqueous adhesives which apply less loads on the environment. Accordingly, investigations have been made on poly(vinyl acetate) emulsion adhesives containing no plasticizer (hereinafter also referred to as "plasticizer-free vinyl acetate emulsion adhesives") (see Patent Documents 1 to 9).
Patent Document 1: Japanese Unexamined Patent Application Publication (JP-A) No. Hei 11-92734
Patent Document 2: JP-A No. 2000-239307
Patent Document 3: JP-A No. 2000-302809
Patent Document 4: JP-A No. 2001-131206
Patent Document 5: JP-A No. 2001-302709
Patent Document 6: JP-A No. Hei 11-279507
Patent Document 7: JP-A No. 2001-294833
Patent Document 8: JP-A No. 2003-176468
Patent Document 9: JP-A No. 2004-189891

### Disclosure of Invention

### Problems to be Solved by the Invention

However, cured articles and coatings using conventional plasticizer-free vinyl acetate emulsion adhesives have low optical transparency, may become opaque and cannot significantly form highly transparent cured articles and coatings, in contrast to cured articles and coatings using poly(vinyl acetate) emulsion adhesives containing plasticizers (hereinafter also referred to as "plasticizer-containing vinyl acetate emulsion adhesives").
Some of them therefore contain high-boiling solvents such as 3-methyl-3-methoxybutanol for improving the transparency. However, such high-boiling solvents are essentially VOC components, and demands have been made to provide plasticizer-free vinyl acetate emulsion adhesives containing no or substantially no high-boiling solvent.
Accordingly, an object of the present invention is to provide a poly(vinyl acetate) emulsion that can form a cured article or a film having transparency equal to or higher than that of conventional equivalents even though containing no plasticizer at all and is free from or substantially free from VOC components. Another object of the present invention is to provide a method for producing the poly(vinyl acetate) emulsion, and to provide an aqueous adhesive.

### Means for Solving the Problems

After intensive investigations to achieve the above objects, the present inventors have found that when a poly (vinyl acetate) emulsion is prepared by seed polymerization in the presence of an ethylene-vinyl acetate copolymer emulsion prepared by using a specific amount of a specific dispersing agent, the resulting poly(vinyl acetate) emulsion can form a cured article or film exhibiting satisfactory transparency and is free from or substantially free from VOC components. The present invention has been achieved based on these findings.
Specifically, the present invention provides a poly(vinyl acetate) emulsion as a seed polymerization product of a monomer component comprising at least vinyl acetate, the seed polymerization being carried out in an ethylene-vinyl

acetate copolymer emulsion, wherein the ethylene-vinyl acetate copolymer emulsion has been prepared by using a dispersing agent in an amount less than 3 parts by mass to 100 parts by mass of a dispersoid, the dispersing agent comprising a vinyl alcohol polymer comprising 1.9 percent by mole or more of a unit represented by following Formula (1) relative to the total of vinyl alcohol units in a polymer chain after saponification to a degree of saponification of 99 percent by mole or more.

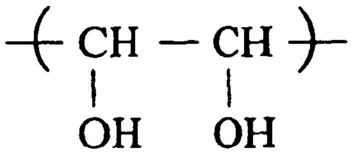

(1)

The ethylene-vinyl acetate copolymer emulsion used in the poly(vinyl acetate) emulsion preferably has an average particle diameter of 1.0 to 2.5 μm. The poly(vinyl acetate) emulsion preferably has an average particle diameter of 3.5 μm or less.

The monomer component to be subjected to the seed polymerization according to the present invention can further comprise another polymerizable unsaturated monomer in addition to vinyl acetate.

The present invention further provides a method for producing the poly(vinyl acetate) emulsion, comprising the step of carrying out seed polymerization of a monomer component comprising at least vinyl acetate in an ethylene-vinyl acetate copolymer emulsion, the ethylene-vinyl acetate copolymer emulsion having been prepared by using a dispersing agent in an amount less than 3 parts by mass to 100 parts by mass of a dispersoid, the dispersing agent comprising a vinyl alcohol polymer comprising 1.9 percent by mole or more of a unit represented by following Formula (1) relative to the total of vinyl alcohol units in a polymer chain after saponification to a degree of saponification of 99 percent by mole or more.

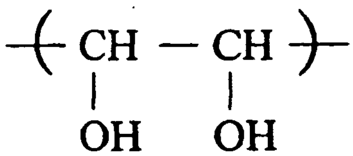

(1)

In the method for producing the poly(vinyl acetate) emulsion according to the present invention, it is preferred that the monomer component to be subjected to the seed polymerization further comprises another polymerizable unsaturated monomer in addition to vinyl acetate, and the step of carrying out seed polymerization comprises the steps of (A) feeding vinyl acetate to the system and carrying out the seed polymerization of vinyl acetate; and (B) feeding the polymerizable unsaturated monomer to the system separately and independently from vinyl acetate.

In addition, the present invention provides an aqueous adhesive comprising a poly(vinyl acetate) emulsion, in which the poly(vinyl acetate) emulsion is the above-mentioned poly(vinyl acetate) emulsion.

In the present specification, "acrylic" and "methacrylic" are also generically referred to as "(meth)acrylic", and "acryloyl" and "methacryloyl" are also generically referred to as "(meth)acryloyl". The symbol "$C_{a\text{-}b}$" means that the carbon number is "a" to "b". Consequently, the term "(meth)acrylic acid $C_{1\text{-}18}$ alkyl ester", for example, means that the alkyl group in the alkoxycarbonyl group in the (meth)acrylic acid alkyl ester is an alkyl group having one to eighteen carbon atoms.

Advantages

The present invention can provide a poly(vinyl acetate) emulsion that can form a cured article or film having transparency equal to or higher than that of conventional equivalents even though containing no plasticizer at all and is free from or substantially free from VOC components.

Best Mode for Carrying Out the Invention

[Ethylene-vinyl acetate copolymer emulsions]

The poly(vinyl acetate) emulsions according to the present invention (hereinafter also referred to as "PVAc emulsions") are prepared by subjecting a monomer component comprising at least vinyl acetate to seed polymerization in an ethylene-vinyl acetate copolymer emulsion (hereinafter also referred to as "EVA emulsion"). In this procedure, the EVA emulsion is an ethylene-vinyl acetate copolymer emulsion prepared by using a dispersing agent in an amount less than 3 parts by mass (excluding 0 parts by mass; namely, more than 0 part by mass and less than 3 parts by mass) to 100 parts by mass of a dispersoid, the dispersing agent comprising a vinyl alcohol polymer (hereinafter also referred to as "1,2-glycol-enriched PVA") having a unit represented by following Formula (1) (1,2-dihydroxyethylene unit) in an amount of 1.9 percent by mole or more to the total of vinyl alcohol units in a polymer chain after saponification to a degree of saponification of 99 percent by mole or more.

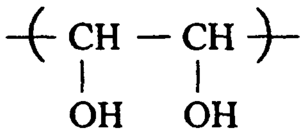
(1)

In the seed polymerization for the preparation of the PVAc emulsions, the EVA emulsion is used as a seed emulsion. Specifically, emulsion particles in the EVA emulsion is used as seed particles, and the ethylene-vinyl acetate copolymer in the EVA emulsion is used as a seed polymer.

The proportion of the unit represented by Formula (1) (1,2-dihydroxyethylene unit) is generally determined using a proton NMR spectrum as mentioned below, and, because of the determination method, the proportion is indicated as "the proportion to the total of vinyl alcohol units in a polymer chain after saponification to a degree of saponification of 99 percent by mole or more". The proportion can also be said as the proportion to the total amount of vinyl alcohol units and vinyl acetate units as monomer units in a 1,2-glycol-enriched PVA (namely, a 1,2-glycol-enriched PVA not undergoing resaponification).

(High 1,2-glycol-containing PVA)

The 1,2-glycol-enriched PVA used as a dispersing agent in the preparation of the EVA emulsions means a vinyl alcohol polymer having the unit represented by Formula (1) (1,2-dihydroxyethylene unit) in an amount of 1.9 percent by mole or more to the total of vinyl alcohol units in a polymer chain after saponification to a degree of saponification of 99 percent by mole or more. The unit represented by Formula (1) is formed as a result that adjacent vinyl alcohol units as monomer units are combined so that carbon atoms each having a hydroxyl group are combined with each other [in the form of "head-to-head bond" or "tail-to-tail bond" (generally called as "head-to-head bond")]. Accordingly, the 1,2-glycol-enriched PVA means "a vinyl alcohol polymer having 1,2-glycol bonds in an amount of 1.9 percent by mole or more to the total of vinyl alcohol units in a polymer chain after saponification to a degree of saponification of 99 percent by mole or more". In other words, the 1,2-glycol-enriched PVA means "a vinyl alcohol polymer having 1.9 percent by mole or more of 1,2-glycol bonds relative to vinyl alcohol units and vinyl acetate units as monomer units".

Specifically, when the vinyl alcohol polymer has a moiety comprising combined five vinyl alcohol units as monomer units, represented by following Formula (2):

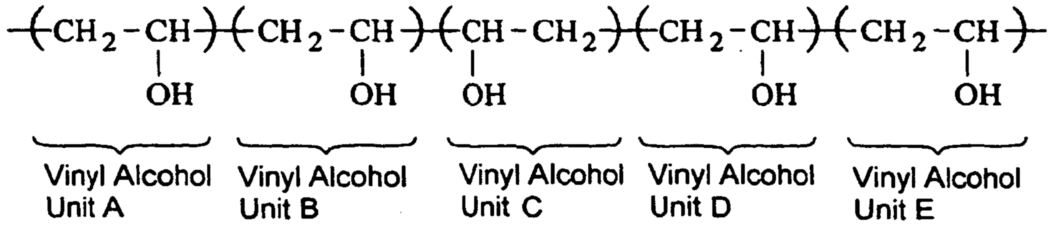

(2)

wherein the vinyl alcohol units are referred to as, from the left, Vinyl Alcohol Unit A, Vinyl Alcohol Unit B, Vinyl Alcohol

Unit C, Vinyl Alcohol Unit D, and Vinyl Alcohol Unit E, and in these Vinyl Alcohol Units A to E, the carbon atom combined with two hydrogen atoms is defined as a "head carbon atom", and the carbon atom combined with one hydrogen atom and one hydroxyl group is defined as a "tail carbon atom". Vinyl Alcohol Units A, B, C, D, and E are combined in the following forms (a) to (d):

(a) Vinyl Alcohol Unit A is combined with Vinyl Alcohol Unit B in such a form that the tail carbon atom of Vinyl Alcohol Unit A is combined with the head carbon atom of Vinyl Alcohol Unit B ("head-to-tail bond" form);
(b) Vinyl Alcohol Unit B is combined with Vinyl Alcohol Unit C in such a form that the tail carbon atom of Vinyl Alcohol Unit B is combined with the tail carbon atom of Vinyl Alcohol Unit C ("tail-to-tail bond" form);
(c) Vinyl Alcohol Unit C is combined with Vinyl Alcohol Unit D in such a form that the head carbon atom of Vinyl Alcohol Unit C is combined with the head carbon atom of Vinyl Alcohol Unit D ("head-to-head bond" form); and
(d) Vinyl Alcohol Unit D is combined with Vinyl Alcohol Unit E in such a form that the tail carbon atom of Vinyl Alcohol Unit D is combined with the head carbon atom of Vinyl Alcohol Unit E ("head-to-tail bond" form). Accordingly, in the bond form represented by Formula (2), Vinyl Alcohol Unit B and Vinyl Alcohol Unit C are combined so that the carbon atoms each having a hydroxyl group are combined with each other, and this forms the 1,2-dihydroxyethylene unit represented by Formula (1). Of Vinyl Alcohol Units A to E, Vinyl Alcohol Unit A, Vinyl Alcohol Unit B, Vinyl Alcohol Unit D, and Vinyl Alcohol Unit E are introduced into the inside of the polymer chain in a regular repeating form so that the head carbon atom and the tail carbon atom are arranged in this order from the left; but Vinyl Alcohol Unit C is introduced so that the tail carbon atom and the head carbon atom are arranged in this order from the left. Thus, Vinyl Alcohol Unit C is introduced in the polymer chain not in a regular repeating form as in the other vinyl alcohol units but in an irregular repeating form.

As has been discussed above, the 1,2-dihydroxyethylene unit represented by Formula (1) is not a repeating unit (monomer unit) but a partial unit constituting two vinyl alcohol units in which adjacent two carbon atoms each having a hydroxyl group are combined with each other. The number of 1,2-dihydroxyethylene units corresponds to the number of vinyl alcohol units which are introduced into the inside of the polymer chain in an irregular repeating form as with Vinyl Alcohol Unit C or the number of carbon atoms each having a hydroxyl group in the vinyl alcohol units.

The content (proportion) of the 1,2-glycol bonds, i.e., the units represented by Formula (1), in the 1,2-glycol-enriched PVA is not specifically limited, as long as it is 1.9 percent by mole or more, but is preferably 1.95 percent by mole or more, more preferably 2.0 percent by mole or more, and especially preferably 2.1 percent by mole or more. The content of 1,2-glycol bonds in the 1,2-glycol-containing PVA is not specifically limited in its upper limit and can be, for example, 4 percent by mole or less, preferably 3.5 percent by mole or less, and more preferably 3.2 percent by mole or less. If the 1,2-glycol-enriched PVA comprises 1,2-glycol bonds in a content less than 1.9 percent by mole, the cured article or film made from the resulting PVAc emulsion has decreased transparency. In contrast, a 1,2-glycol-enriched PVA comprising 1,2-glycol bonds in a content exceeding 4 percent by mole may not be satisfactorily prepared.

The proportion of the 1,2-dihydroxyethylene units represented by Formula (1), namely, the proportion of 1,2-glycol bonds, in the 1,2-glycol-enriched PVA can be determined by a known or conventional analysis procedure and is preferably determined by the analysis of a nuclear magnetic resonance spectrum (NMR spectrum). The proportion of the 1,2-dihydroxyethylene units represented by Formula (1) in the 1,2-glycol-enriched PVA, if determined by the analysis of a nuclear magnetic resonance spectrum (NMR spectrum), can be determined by using a proton NMR spectrum ($^1$H-NMR spectrum). Specifically, the proportion of the 1,2-dihydroxyethylene units represented by Formula (1), namely, the proportion of 1,2-glycol bonds can be determined in the following manner. The 1,2-glycol-enriched PVA is saponified to a degree of saponification of 99 percent by mole or more, is fully washed with methanol, and is dried at 90°C under reduced pressure for two days. The degree of saponification herein is determined according the method specified in Japanese Industrial Standards (JIS) K 6726. The resulting vinyl alcohol polymer (a vinyl alcohol polymer saponified to a degree of saponification of 99 percent by mole or more) is dissolved in d6-DMSO (deuterated dimethyl sulfoxide), is combined with a few drops of trifluoroacetic acid, and thereby yields a sample. The sample is analyzed by proton NMR ("GX-500", a product of JOEL) at 500 MHz at 80°C to thereby determine the proportion. The detail of the procedure of determining the proportion of 1,2-glycol bonds in a 1,2-glycol-enriched PVA using a proton NMR spectrum can be found, for example, in "KOBUNSHI-KAKO (Polymer Processing)" [Kobunshikankokai, 1989, 38, 48, 24(388)-32(396)]. This document shows examples of proton NMR spectral data relating to the 1,2-glycol-enriched PVA, for example, in FIG. 4.

In the proton NMR spectral data relating to the vinyl alcohol polymer, a peak (signal) derived from a hydrogen atom combined to a methine carbon atom (the carbon atom combined with a hydroxyl group) of the vinyl alcohol unit as the monomer component is observed at 3.2 to 4.0 ppm, and the integral of the peak is defined as "A" herein. A peak derived from a hydrogen atom bound to a methine carbon atom in Vinyl Alcohol Unit C of the vinyl alcohol unit represented by Formula (2), namely, the vinyl alcohol unit introduced in an irregular repeating form into the inside of the polymer chain, is observed at 3.24 ppm, and the integral of the peak is defined as "B" herein. The proportion of the 1,2-dihydroxyethylene units, namely, the proportion of the 1,2-glycol bonds, can be determined by determining the integrals A and

B of these peaks and adapting the values to Formula (i):

$$\text{Proportion of 1,2-dihydroxyethylene unit (\%)} = (B/A) \times 100 \quad \text{(i)}$$

In contrast, the peak derived from a hydrogen atom bound to a methine carbon atom in Vinyl Alcohol Unit B of the vinyl alcohol unit represented by Formula (2) is observed at 3.51 ppm. Vinyl Alcohol Unit B is, in other words, a vinyl alcohol unit having a methine carbon atom bound to a methine carbon atom of the vinyl alcohol unit introduced in an irregular repeating form into the inside of the polymer chain. Consequently, the hydrogen atom bound to the methine carbon atom in Vinyl Alcohol Unit C can be distinguished from the hydrogen atom bound to the methine carbon atom in Vinyl Alcohol Unit B in the proton NMR spectrum. Thus, the proportion (%) of the 1,2-dihydroxyethylene unit can be determined in accordance with Formula (i).

When a terminal vinyl alcohol unit of the polymer chain is in an irregular repeating form, as is represented by following Formula (3):

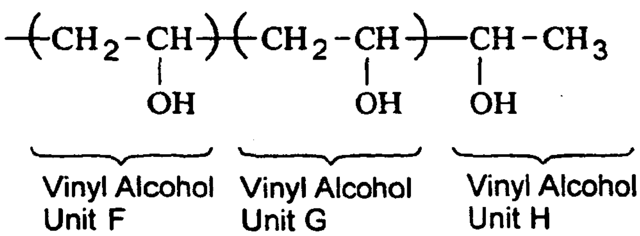


(3)

wherein the vinyl alcohol units are defined as Vinyl Alcohol Unit F, Vinyl Alcohol Unit G, and Vinyl Alcohol Unit H from the left, the peak derived from a hydrogen atom bound to the methine carbon atom in the vinyl alcohol unit introduced in an irregular repeating form at the terminal of the polymer chain, namely, Vinyl Alcohol Unit H in Formula (3), is observed at a position different from that of the peak derived from the hydrogen atom bound to the methine carbon atom of the vinyl alcohol unit introduced in an irregular repeating form into the inside of the polymer chain, such as Vinyl Alcohol Unit C in Formula (2). Namely, the peak in question is observed not at 3.25 ppm but at 3.44 ppm. The proportion of 1,2-dihydroxyethylene units, if determined using Formula (i), does not include 1,2-dihydroxyethylene units of the vinyl alcohol unit introduced in an irregular repeating form at the terminal of the polymer chain. However, even if the 1,2-dihydroxyethylene units of the vinyl alcohol unit introduced at the terminal of the polymer chain are excluded in calculation, the proportion of 1,2-dihydroxyethylene units as a whole is substantially not affected. This is because the number of 1,2-dihydroxyethylene units of the vinyl alcohol unit introduced at the terminal of the polymer chain is generally too small to be quantitatively determined; that is, the number of 1,2-dihydroxyethylene units of the vinyl alcohol units introduced in an irregular repeating form into the inside of the polymer chain is much larger than the number of 1,2-dihydroxyethylene units of the vinyl alcohol unit introduced at the terminal of the polymer chain.

The positions of peaks (signals) in NMR spectral data such as proton NMR spectral data may shift or vary to some extent depending on how the zero point (reference point) is set.

The 1,2-glycol-enriched PVA can be produced according to a known or conventional production method. Specifically, examples of the production method of the 1,2-glycol-enriched PVA are (1) a method of carrying out the polymerization of vinyl acetate under pressure (under a load) at temperatures higher than those under regular conditions to prepare a poly(vinyl alcohol), and saponifying the resulting polymer; and (2) a method of carrying out copolymerization of vinyl acetate with vinylene carbonate so as to achieve the above content of 1,2-glycol bonds, and saponifying the resulting copolymer. The production method (1) is preferably employed as the production method of the 1,2-glycol-enriched PVA in the present invention. The polymerization temperature of vinyl acetate in the production method (1) of the 1,2-glycol-enriched PVA can be, for example, 75°C to 200°C, is preferably 90°C to 190°C, and more preferably 100°C to 180°C. The pressurization condition must be essentially set so that the polymerization system stands the boiling temperature or lower. The pressure is preferably 0.2 MPa or more, and more preferably 0.3 MPa or more. The pressure is not specifically limited in its upper limit but is preferably 5 MPa or less and more preferably 3 MPa or less.

The polymerization process of vinyl acetate in the production of the 1,2-glycol-enriched PVA is not specifically limited and can be any of polymerization processes such as solution polymerization, bulk polymerization, suspension polymerization, and emulsion polymerization. Among them, the solution polymerization is preferred for satisfactory control of the degree of polymerization. Preferred solvents for use in the solution polymerization are lower alcohols such

as methyl alcohol, ethyl alcohol, and propyl alcohol, of which methyl alcohol is more preferred. The polymerization can use, for example, a polymerization initiator. The polymerization initiator can be selected from among known or conventional polymerization initiators such as radical polymerization initiators according typically to the polymerization process. Specific examples of such polymerization initiators are azo polymerization initiators such as α,α'-azobis(isobutyronitrile), 2,2'-azobis(2,4-dimethylvaleronitrile), 2,2'-azobis(4-methoxy-2,4-dimethylvaleronitrile), 1,1'-azobis(cyclohexane-1-carbonitrile), and 2,2'-azobis(N-butyl-2-methylpropionamide); and peroxide polymerization initiators such as benzoyl peroxide and n-propyl peroxycarbonate.

The production methods (1) and (2) of the 1,2-glycol-enriched PVA include the step of saponifying a vinyl acetate polymer in the preparation of the 1,2-glycol-enriched PVA. The degree of saponification of the 1,2-glycol-enriched PVA is not specifically limited and is generally 80 percent by mole or more, preferably 85 percent by mole or more, and more preferably 88 percent by mole or more. If the degree of saponification of the 1,2-glycol-enriched PVA is less than 80 percent by mole, the resulting 1,2-glycol-enriched PVA may have decreased solubility in water. Accordingly, the 1,2-glycol-enriched PVA may further comprise a vinyl acetate unit in addition to the vinyl alcohol unit, for example, at some degrees of saponification. The degree of saponification of the 1,2-glycol-enriched PVA can be determined according to JIS K 6726.

The saponification process of the vinyl acetate polymer is not specifically limited and can be any known or conventional saponification process. Specifically, the saponification can be carried out, for example, by a process in which the vinyl acetate polymer is dissolved in a solvent, and is saponified with a catalyst. The solvent herein can be any of alcohols such as methanol; esters such as methyl acetate; dimethyl sulfoxide; and mixtures of these solvents. The catalyst includes, for example, base catalysts such as sodium hydroxide and potassium hydroxide; and acid catalysts such as sulfuric acid, hydrochloric acid, and p-toluenesulfonic acid. The saponification reaction is carried out under conditions appropriately adjusted according typically to the structure of the vinyl acetate polymer and the target degree of saponification of the 1,2-glycol-enriched PVA. The saponification reaction is generally preferably carried out using 0.001 to 5 moles of the catalyst such as a base catalyst or acid catalyst for saponification to 1 mole of the vinyl acetate units in the vinyl acetate polymer at temperatures of 20°C to 180°C for 0.1 to 20 hours. The saponification reaction may be carried out in any of a batch system and a continuous system.

The resulting 1,2-glycol-enriched PVA prepared by the saponification of the vinyl acetate polymer may be used as intact without washing but is preferably washed before use. The washing fluid to be used in the washing of the 1,2-glycol-enriched PVA includes known or conventional washing fluids such as methanol, acetone, acetic acid, acetic esters including methyl acetate and ethyl acetate, hexane, and water. Each of these can be used alone or in combination.

The 1,2-glycol-enriched PVA is preferably a 1,2-glycol-enriched PVA having a degree of polymerization (viscosity-average degree of polymerization) of 100 to 4000. The degree of polymerization of the 1,2-glycol-enriched PVA, however, may be less than 100 or more than 4000. The viscosity-average degree of polymerization (P) as the degree of polymerization of the 1,2-glycol-enriched PVA is determined according to JIS K 6726. Specifically, it can be determined from the limiting viscosity [η] according to following Formula (ii), which limiting viscosity is determined by resaponifying and purifying the 1,2-glycol-enriched PVA to a degree of saponification of 99.5 percent by mole or more and measuring the limiting viscosity in water at 30°C.

$$P = ([\eta] \times 1000/8.29)^{(1/0.62)} \quad \text{(ii)}$$

The 1,2-glycol-enriched PVA comprises, as monomer units, the vinyl alcohol unit, and where necessary, a vinyl acetate unit. It can further comprises any unit derived from other ethylenically unsaturated monomers. Such ethylenically unsaturated monomers are not specifically limited, as long as they are monomer components being copolymerizable with vinyl acetate (copolymerizable monomers). Specifically, the copolymerizable monomers can be appropriately selected from among various ethylenically unsaturated monomers (polymerizable unsaturated monomers) such as vinyl esters other than vinyl acetate, olefins, carboxyl group-containing monomers, acid anhydride group-containing monomers, hydroxyl group-containing monomers, epoxy group-containing monomers, amino group-containing monomers, cyano group-containing monomers, (N-substituted) acrylamide monomers, vinyl ethers, heterocycle-containing vinyl monomers, halogen atom-containing vinyl monomers, sulfonic group-containing vinyl monomers, N-vinylamides, N-vinyl lactams, acrylic monomers, styrenic monomers, and polyfunctional monomers. Each of these copolymerizable monomers can be used alone or in combination.

Specifically, examples of the vinyl esters other than vinyl acetate include vinyl esters of aliphatic carboxylic acids, such as vinyl formate, vinyl propionate, vinyl butyrate, vinyl pivalate, vinyl caproate, vinyl caprylate, vinyl caprate, vinyl laurate, vinyl stearate, vinyl octoate, and VEOVA 10 (trade name; a product of Shell Japan Ltd. (Shell Chemical Japan Ltd.)); and vinyl esters of aromatic carboxylic acids, such as vinyl benzoate.

Examples of the olefins are α-olefins such as ethylene, propylene, butylene, isobutylene, and pentene; and

other olefins such as isoprene, butadiene, and chloroprene. Examples of the carboxyl group-containing monomers are acrylic acid, methacrylic acid, itaconic acid, maleic acid, fumaric acid, crotonic acid, as well as carboxyalkyl (meth) acrylates such as carboxyethyl acrylate. The acid anhydride group-containing monomers include maleic anhydride and itaconic anhydride. Examples of the hydroxyl group-containing monomers are hydroxyethyl (meth)acrylate, hydroxypropyl (meth)acrylate, and hydroxybutyl (meth)acrylate. The epoxy group-containing monomers include glycidyl (meth) acrylate. Examples of the amino group-containing monomers are aminoethyl (meth)acrylate, N,N-dimethylaminoethyl (meth)acrylate, and t-butylaminoethyl (meth)acrylate. Examples of the cyano group-containing monomers are acrylonitrile and methacrylonitrile. Examples of the (N-substituted) acrylamide monomers are (meth)acrylamide, N,N-dimethyl (meth)acrylamide, N-butyl(meth)acrylamide, N-methylol(meth)acrylamide, N-methylolpropane(meth)acrylamide, as well as trimethyl-(3-acrylamido-3-dimethylpropyl)-ammonium chloride, acrylamido-2-methylpropanesulfonic acid and sodium salt thereof. Examples of the vinyl ethers are methyl vinyl ether, ethyl vinyl ether, n-propyl vinyl ether, iso-propyl vinyl ether, n-butyl vinyl ether, sec-butyl vinyl ether, tert-butyl vinyl ether, and tert-amyl vinyl ether. Examples of the heterocycle-containing vinyl monomers are N-vinylpyrrolidone, N-vinylpyridine, N-vinylpyrimidine, N-vinylpyrazine, N-vinylpyrrole, N-vinylimidazole, N-(1-methylvinyl)pyrrolidone, N-vinylpiperidone, N-vinylpiperazine, N-vinyloxazole, and N-vinylmorpholine. Examples of the halogen atom-containing vinyl monomers are vinyl chloride, vinyl bromide, vinyl fluoride, vinylidene chloride, vinylidene fluoride, and tetrafluoroethylene. The sulfonic group-containing vinyl monomers include sodium vinylsulfonate, sodium allylsulfonate, and styrenesulfonic acid. The N-vinylamides include N-vinylformamide and N-vinylacetamide. The N-vinyllactams include N-vinylcaprolactam.

The acrylic monomers include (meth)acrylic acid esters such as (meth)acrylic acid alkyl esters, (meth)acrylic acid cycloalkyl esters, and (meth)acrylic acid aryl esters. Examples of the (meth)acrylic acid alkyl esters are methyl (meth)acrylate, ethyl (meth)acrylate, propyl (meth)acrylate, isopropyl (meth)acrylate, butyl (meth)acrylate, isobutyl (meth) acrylate, s-butyl (meth)acrylate, t-butyl (meth)acrylate, and other (meth)acrylic acid alkyl esters. The (meth)acrylic acid cycloalkyl esters include cyclohexyl (meth)acrylate. The (meth)acrylic acid aryl esters include phenyl (meth)acrylate. Examples of the styrenic monomers are styrene, vinyltoluene, and $\alpha$-methylstyrene.

The 1,2-glycol-enriched PVA for use in the present invention can also be a terminally modified product prepared by polymerizing vinyl acetate and, where necessary, a copolymerizable monomer as the monomer component in the presence of a thiol compound such as thiolacetic acid or mercaptopropionic acid, and saponifying the resulting vinyl acetate polymer.

(Ethylene-vinyl acetate copolymer)

The ethylene-vinyl acetate copolymer in the EVA emulsion is not specifically limited and is generally any of ethylene-vinyl acetate copolymers having an ethylene content of about 5 to 60 percent by mass. Among them, ethylene-vinyl acetate copolymers having an ethylene content of 15 to 35 percent by mass are preferred as the ethylene-vinyl acetate copolymer in the EVA emulsion, because they give specifically low film-forming temperatures and impart excellent bond strength to the EVA emulsion.

The vinyl acetate content of the ethylene-vinyl acetate copolymer in the EVA emulsion is generally about 40 to about 95 percent by mass and preferably 65 to 85 percent by mass.

The ethylene-vinyl acetate copolymer in the EVA emulsion may further comprise, as the monomer component, any of monomer components copolymerizable with ethylene and/or vinyl acetate, in addition to ethylene and vinyl acetate. The copolymerizable monomers can be appropriately selected from among various ethylenically unsaturated monomers (polymerizable unsaturated monomers) such as vinyl esters other than vinyl acetate, olefins other than ethylene, carboxyl group-containing monomers, acid anhydride group-containing monomers, hydroxyl group-containing monomers, epoxy group-containing monomers, amino group-containing monomers, cyano group-containing monomers, (N-substituted) acrylamide monomers, vinyl ethers, heterocycle-containing vinyl monomers, halogen atom-containing vinyl monomers, sulfonic group-containing vinyl monomers, N-vinylamides, N-vinyl lactams, acrylic monomers, styrenic monomers, and polyfunctional monomers. These monomer components can be appropriately selected from among the monomer components specifically listed in the 1,2-glycol-enriched PVA.

The ethylene-vinyl acetate copolymer in the EVA emulsion according to the present invention may further comprise a crosslinkable monomer in a content of 10 percent by mass or less (for example, about 0 to about 10 percent by mass) as the monomer component. Examples of such crosslinkable monomers are polar group-containing monomers such as carboxyl group-containing monomers, acid anhydride group-containing monomers, hydroxyl group-containing monomers, epoxy group-containing monomers, and amino group-containing monomers.

Each of the ethylene-vinyl acetate copolymers can be used alone or in combination in the EVA emulsion.

(Production method of EVA emulsion)

The EVA emulsion is prepared using a dispersing agent comprising a 1,2-glycol-enriched PVA. The amount

(solid content) of the dispersing agent comprising a 1,2-glycol-enriched PVA should essentially be less than 3 parts by mass to 100 parts by mass of the dispersoid. The amount is, for example, 0.1 parts by mass or more and less than 3 parts by mass, preferably 0.5 parts by mass or more and less than 3 parts by mass, and more preferably 1 parts by mass or more and less than 3 parts by mass. If the amount of the dispersing agent comprising a 1,2-glycol-enriched PVA is 3 parts by mass or more to 100 parts by mass of the dispersoid, low-temperature film formability deteriorates.

The dispersing agent comprising a 1,2-glycol-enriched PVA is not specifically limited, as long as it is a dispersing agent containing the 1,2-glycol-enriched PVA as an active ingredient or main component. It is preferably a dispersing agent comprising the 1,2-glycol-enriched PVA alone. Specifically, the EVA emulsion is preferably prepared by using the 1,2-glycol-enriched PVA as the dispersing agent in an amount less than 3 parts by mass relative to 100 parts by mass of the dispersoid.

The EVA emulsion structurally comprises the ethylene-vinyl acetate copolymer dispersed in water by the action of the dispersing agent comprising a 1,2-glycol-enriched PVA. The EVA emulsion can be prepared by any method, as long as the preparation is carried out using the dispersing agent comprising a 1,2-glycol-enriched PVA. The EVA emulsion can be any of, for example, (1) an EVA emulsion prepared by dispersing a polymerized ethylene-vinyl acetate copolymer (seed polymer) in water by the action of the dispersing agent comprising a 1,2-glycol-enriched PVA, and (2) an EVA emulsion prepared by carrying out emulsion polymerization using the dispersing agent comprising a 1,2-glycol-enriched PVA.

The polymerized ethylene-vinyl acetate copolymer for use in the production method (1) of the EVA emulsion can be any of ethylene-vinyl acetate copolymers prepared by various polymerization processes such as solution polymerization, emulsion polymerization, and suspension polymerization. The polymerization procedure of the ethylene-vinyl acetate copolymer can be a known or conventional polymerization procedure selected according to the type of the polymerization process. In this connection, the dispersoid herein is the ethylene-vinyl acetate copolymer, and the dispersing agent comprising a 1,2-glycol-enriched PVA is used in an amount less than 3 parts by mass to 100 parts by mass of the ethylene-vinyl acetate copolymer.

The emulsion polymerization in the production method (2) of the EVA emulsion is carried out using the monomer components including ethylene and vinyl acetate in predetermined proportions set according to the type of the ethylene-vinyl acetate copolymer. Specifically, the EVA emulsion can be prepared by carrying out the emulsion polymerization of the monomer components including ethylene and vinyl acetate according to a known or conventional emulsion polymerization procedure using the dispersing agent comprising a 1,2-glycol-enriched PVA. In this procedure, the dispersoid is the ethylene-vinyl acetate copolymer, and the dispersing agent comprising a 1,2-glycol-enriched PVA is used in an amount less than 3 parts by mass to 100 parts by mass of the ethylene-vinyl acetate copolymer to be prepared. It can also be used in an amount less than 3 parts by mass to 100 parts by mass of the total monomer components constituting the ethylene-vinyl acetate copolymer.

Specifically, a regular emulsion polymerization procedure can be used, as long as the above-specified conditions are satisfied. The EVA emulsion can be prepared, for example, in the following manner. Predetermined amounts of vinyl acetate monomer and an aqueous solution of the 1,2-glycol-enriched PVA are charged into a pressure-tight reactor equipped with a reaction-temperature adjuster, a stirrer, and a system for adding a polymerization initiator, and the temperature in the pressure-tight reactor is adjusted to a desired polymerization temperature (for example, 40°C to 80°C). The inside of the reaction system is purged with nitrogen or ethylene to remove oxygen, ethylene is fed to a predetermined pressure (for example, 5 to 80 $kg/cm^2$), and a predetermined amount of a polymerization initiator is added sequentially or at once to the reaction system to carry out the copolymerization of ethylene and vinyl acetate to thereby yield the EVA emulsion. Where necessary, another portion of the vinyl acetate monomer may be added sequentially or at once in a predetermined step after the initiation of the polymerization. Examples of the polymerization initiator are redox polymerization initiators comprising an oxidizing agent and a reducing agent in combination. The oxidizing agent includes hydrogen peroxide, ammonium persulfate, and potassium persulfate. The reducing agent includes ascorbic acid or sodium salt thereof, tartaric acid or sodium salt thereof, and sodium hydrogen sulfite. The amount of the polymerization initiator can be, for example, about 0.01 to about 1 part by mass to 100 parts by mass of the total monomer components including ethylene and vinyl acetate.

The EVA emulsion for use in the present invention can be an emulsion prepared in a first step of a multistep polymerization process including the first step of preparing an EVA emulsion by emulsion polymerization and a second step of carrying out seed polymerization in the EVA emulsion. The PVAc emulsions (poly(vinyl acetate) emulsions) according to the present invention can also be produced by sequential polymerization such as the multistep polymerization.

Any other dispersing agents, such as other poly(vinyl alcohol)s and various surfactants, can be used in combination with the dispersing agent comprising a 1,2-glycol-enriched PVA in the preparation of the EVA emulsion within ranges not adversely affecting, for example, advantages of the present invention.

The EVA emulsion for use in the present invention can have a reduced average particle diameter of emulsion particles in the EVA emulsion, because the amount of the dispersing agent typified by the 1,2-glycol-enriched PVA is

small. The average particle diameter of the EVA emulsion can be, for example, 1.0 to 2.5 μm, preferably 1.0 to 2.4 μm, and more preferably 1.0 to 2.3 μm.

The coefficient of variation (CV) indicating the variance of the particle size distribution of emulsion particles in the EVA emulsion is preferably 1.3 or less and more preferably 1.2 or less, wherein CV = [(85% particle diameter)-(15% particle diameter)]/(50% particle diameter).

The average particle diameter and coefficient of variation (CV) of the EVA emulsion can be determined using the laser diffraction/scattering particle size distribution analyzer LA-500 [HORIBA, Ltd.] with a light source of He-Ne laser at a wavelength of 632.8 nm according to the following procedures (1) to (4). The average particle diameter of the EVA emulsion to be measured is by volume.

(1) The EVA emulsion (0.5 g) is weighed in a beaker, is combined with 10 g of distilled water, is stirred with a glass rod, and thereby yields a dispersion.

(2) The dispersion is placed in a circulation tank so as to have a concentration within an appropriate range for the analyzer so as to have a transmittance of 70% to 90%.

(3) The dispersion is dispersed for one minute with ultrasound at 39 KHz and 40 W, and the particle diameters (volume basis) of emulsion particles in the EVA emulsion are measured.

(4) The average particle diameter and the coefficient of variation (CV) indicating the variance of the particle size distribution of the emulsion particles in the EVA emulsion are determined by calculation from a graph indicating particle size distribution on the volume fraction basis. Initially, the 15% particle diameter, 50% particle diameter, and 85% particle diameter are read out from the graph indicating particle size distribution with the abscissa indicating the particle diameter and the ordinate indicating the frequency. The 15% particle diameter refers to the particle diameter at which the volume fraction frequency reaches 15% when the volume fraction frequency is integrated in ascending particle diameter order. Likewise, the 50% particle diameter and the 85% particle diameter refer to the particle diameters at which the volume fraction frequency reaches 50% and 85%, respectively, when the volume fraction frequency is integrated in ascending particle diameter order. The 50% particle diameter is the average particle diameter. Next, the coefficient of variation (CV) is determined by calculation according to following Formula (iii). The smaller the coefficient of variation (CV) is, the sharper the particle size distribution is.

Coefficient of variation (CV) = [(85% particle diameter)-(15% particle diameter)]/(50% particle diameter) (iii)

[Monomer components subjected to seed polymerization]

According to the present invention, a monomer component comprising at least vinyl acetate is subjected to seed polymerization in the EVA emulsion. The monomer component for use in the seed polymerization is not specifically limited, as long as it comprises at least vinyl acetate. The monomer component to be subjected to the seed polymerization can comprise vinyl acetate alone or can further comprise any other polymerizable unsaturated monomer (hereinafter also referred to as "polymerizable unsaturated monomer for seed polymerization") in addition to vinyl acetate.

The polymerizable unsaturated monomer for seed polymerization is not specifically limited, and examples thereof are ethylenically unsaturated monomers (polymerizable unsaturated monomers) such as acrylic monomers, carboxyl group-containing monomers, acid anhydride group-containing monomers, hydroxyl group-containing monomers, epoxy group-containing monomers, vinyl esters other than vinyl acetate, vinyl ethers, styrenic monomers, olefins, cyano group-containing monomers, (N-substituted) acrylamide monomers, amino group-containing monomers, heterocycle-containing vinyl monomers, halogen atom-containing vinyl monomers, sulfonic acid group-containing vinyl monomers, N-vinylamides, N-vinyllactams, and polyfunctional monomers. Each of the polymerizable unsaturated monomers for seed polymerization can be used alone or in combination.

The acrylic monomers include (meth)acrylic acid esters (acryl acid esters and methacrylic acid esters) as mentioned above. The (meth)acrylic acid esters can be any known (meth)acrylic acid esters, such as (meth)acrylic acid alkyl esters, (meth)acrylic acid cycloalkyl esters, and (meth)acrylic acid aryl esters. Preferred acrylic monomers are (meth)acrylic acid alkyl esters, and representative examples thereof are (meth)acrylic acid alkyl esters such as methyl (meth)acrylate, ethyl (meth)acrylate, propyl (meth)acrylate, butyl (meth)acrylate, isobutyl (meth)acrylate, s-butyl (meth) acrylate, t-butyl (meth)acrylate, pentyl (meth)acrylate, hexyl (meth)acrylate, heptyl (meth)acrylate, 2-ethylhexyl (meth) acrylate, octyl (meth)acrylate, isooctyl (meth)acrylate, nonyl (meth)acrylate, isononyl (meth)acrylate, decyl (meth)acrylate, isodecyl (meth)acrylate, lauryl (meth)acrylate, and stearyl (meth)acrylate, of which (meth)acrylic acid $C_{1-18}$ alkyl

esters are preferred, and (meth)acrylic acid $C_{1-14}$ alkyl esters are more preferred.

Examples of the carboxyl group-containing monomers are acrylic acid, methacrylic acid, itaconic acid, maleic acid, fumaric acid, crotonic acid, as well as carboxyalkyl (meth)acrylates such as carboxyethyl acrylate. The acid anhydride group-containing monomers include maleic anhydride and itaconic anhydride. Examples of the hydroxyl group-containing monomers are hydroxyalkyl methacrylates such as hydroxyethyl (meth)acrylate, hydroxypropyl (meth)acrylate, and hydroxybutyl (meth)acrylate. The epoxy group-containing monomers include glycidyl (meth)acrylate.

The vinyl esters other than vinyl acetate can be any known vinyl esters other than vinyl acetate, and representative examples thereof are vinyl esters of aliphatic carboxylic acids, such as vinyl formate, vinyl propionate, vinyl butyrate, vinyl pivalate, vinyl caproate, vinyl caprylate, vinyl caprate, vinyl laurate, vinyl stearate, vinyl octoate, and VEOVA 10 (trade name; the product of Shell Japan Ltd. (Shell Chemical Japan Ltd.)); and vinyl esters of aromatic carboxylic acids, such as vinyl benzoate.

The vinyl ethers can be any known vinyl ethers, and representative examples thereof are alkyl vinyl ethers such as methyl vinyl ether, ethyl vinyl ether, n-propyl vinyl ether, iso-propyl vinyl ether, n-butyl vinyl ether, sec-butyl vinyl ether, tert-butyl vinyl ether, and tert-amyl vinyl ether.

Examples of the styrenic monomers are styrene, vinyltoluene, and $\alpha$-methylstyrene. The olefins include $\alpha$-olefins such as ethylene, propylene, butylene, isobutylene, and pentene; and other olefins such as isoprene, butadiene, and chloroprene. The cyano group-containing monomers include acrylonitrile and methacrylonitrile. Examples of the (N-substituted) acrylamide monomers are (meth)acrylamide, N,N-dimethyl(meth)acrylamide, N-butyl(meth)acrylamide, N-methylol(meth)acrylamide, and N-methylolpropane (meth)acrylamide; as well as trimethyl-(3-acrylamido-3-dimethylpropyl)-ammonium chloride, acrylamido-2-methylpropane sulfonic acid and a sodium salt thereof.

The amino group-containing monomers, heterocycle-containing vinyl monomers, halogen atom-containing vinyl monomers, sulfonic acid group-containing vinyl monomers, N-vinylamides, N-vinyllactams and other polymerizable unsaturated monomers for seed polymerization include the monomer components specifically listed in the 1,2-glycol-enriched PVA.

[Production method of PVAc emulsion]

According to the present invention, a PVAc emulsion is prepared by subjecting a monomer component comprising at least vinyl acetate to seed polymerization in an ethylene-vinyl acetate copolymer emulsion. The monomer component is a monomer component comprising vinyl acetate alone, or a monomer component comprising vinyl acetate and a polymerizable unsaturated monomer for seed polymerization. The ethylene-vinyl acetate copolymer emulsion is prepared by using a dispersing agent in an amount less than 3 parts by mass relative to 100 parts by mass of the dispersoid, which dispersing agent contains a 1,2-glycol-enriched PVA, i.e., a vinyl alcohol polymer comprising 1.9 percent by mole or more of the 1,2-dihydroxyethylene unit represented by Formula (1) to the total of vinyl alcohol units in the polymer chain after saponification to a degree of saponification of 99 percent by mole or more. Accordingly, the PVAc emulsion according to the present invention can be produced by a production method of a poly(vinyl acetate) emulsion, comprising the step of carrying out seed polymerization of a monomer component comprising at least vinyl acetate in an ethylene-vinyl acetate copolymer emulsion, the ethylene-vinyl acetate copolymer emulsion having been prepared by using a dispersing agent in an amount less than 3 parts by mass to 100 parts by mass of a dispersoid, the dispersing agent comprising a 1,2-glycol-enriched PVA (hereinafter also referred to as "seed polymerization step").

(Seed polymerization step)

In the seed polymerization step, the seed polymerization of a monomer component comprising at least vinyl acetate is carried out in an EVA emulsion, as is illustrated above. The monomer component is a monomer component comprising vinyl acetate, and where necessary, a polymerizable unsaturated monomer for seed polymerization. The EVA emulsion is an ethylene-vinyl acetate copolymer emulsion prepared using less than 3 parts by mass of a dispersing agent comprising a 1,2-glycol-enriched PVA to 100 parts by mass of the dispersoid. The amount of the EVA emulsion in the seed polymerization of the seed polymerization step is not specifically limited. The amount of the EVA emulsion is preferably such that, for example, the content (solid content) of the ethylene-vinyl acetate copolymer (seed polymer) in the EVA emulsion is 3 to 40 percent by mass, preferably 5 to 30 percent by mass, and more preferably 10 to 25 percent by mass of the total resin contents (total solid contents) of the PVAc emulsion (poly(vinyl acetate) emulsion) prepared by the seed polymerization.

The amount of vinyl acetate in the monomer component to be subjected to the seed polymerization is, for example, 10 to 90 percent by mass, preferably 15 to 80 percent by mass, and more preferably 40 to 80 percent by mass, of the total resin contents (total solid contents) of the PVAc emulsion (poly(vinyl acetate) emulsion) prepared by the seed polymerization.

The amount of the polymerizable unsaturated monomer for seed polymerization can be selected within a broad

range according to the desired properties of the emulsion. The amount of the polymerizable unsaturated monomer for seed polymerization is, for example, 0 to 100 parts by mass, preferably 0.05 to 60 parts by mass, and more preferably 0.05 to 40 parts by mass to 100 parts by mass of vinyl acetate.

The monomer component including vinyl acetate and the polymerizable unsaturated monomer for seed polymerization can be fed to the system by any procedure such as batch feeding, continuous feeding, and intermittent feeding. For easy control of the reaction, vinyl acetate is preferably fed to the system by continuous feeding or intermittent feeding. The polymerizable unsaturated monomer for seed polymerization can be fed to the system as a mixture with vinyl acetate (hereinafter also referred to as "monomer mixture"), be fed to the system separately from vinyl acetate, or be fed to the system partially as a monomer mixture and partially separately from vinyl acetate. The polymerizable unsaturated monomer for seed polymerization, if fed separately from vinyl acetate, is preferably fed to the system in a short time as short as possible as in batch feeding, within ranges in which the reaction can be controlled.

The monomer components including vinyl acetate and the polymerizable unsaturated monomer for seed polymerization may be fed as an emulsion after mixing with an aqueous solution of a protective colloid such as a poly(vinyl alcohol) in any case such as separate feeding or feeding as a monomer mixture to the system. Specific examples of the protective colloid are as follows.

The seed polymerizations of vinyl acetate and the polymerizable unsaturated monomer for seed polymerization can be carried out simultaneously or separately in the seed polymerization step. Specifically, the polymerizable unsaturated monomer for seed polymerization may be fed to the system during, before, and/or after the seed polymerization of vinyl acetate in the seed polymerization step. The polymerizable unsaturated monomer for seed polymerization may be fed to the system during the seed polymerization of vinyl acetate or may be fed to the system before and/or after the feeding of vinyl acetate to the system. Accordingly, the polymerizable unsaturated monomer for seed polymerization may be added to the system as a mixture with vinyl acetate, be added separately from vinyl acetate, or partially as a mixture with vinyl acetate and partially separately from vinyl acetate.

The method according to the present invention may comprise a step of feeding vinyl acetate to the system and carrying out the seed polymerization of vinyl acetate (hereinafter also referred to as "seed polymerization step (A)") and a step of independently feeding the polymerizable unsaturated monomer for seed polymerization to the system separately from vinyl acetate (hereinafter also referred to as "additional monomer feeding step (B)"). This can significantly improve the low-temperature bond strength of a cured article or film prepared from the poly(vinyl acetate) emulsion. Accordingly, the seed polymerization step preferably comprises the seed polymerization step (A) of feeding vinyl acetate to the system and carrying out the seed polymerization of vinyl acetate; and the additional monomer feeding step (B) of independently feeding the polymerizable unsaturated monomer for seed polymerization to the system separately from vinyl acetate.

The seed polymerization step (A) is not specifically limited, as long as it is a step of feeding vinyl acetate to the system and carrying out seed polymerization of vinyl acetate. It can be, for example, any step such as a step of carrying out the seed polymerization while feeding vinyl acetate to the system; a step of feeding vinyl acetate to the system and thereafter carrying out the seed polymerization; or the step of sequentially carrying out the feeding of part of vinyl acetate to the system, seed polymerization, feeding of the remainder of vinyl acetate to the system, and seed polymerization.

The additional monomer feeding step (B) can be any process such as a process carried out before the feeding of vinyl acetate to the system in the seed polymerization step (A) [upstream process of the seed polymerization step (A)]; a process carried out after the feeding of vinyl acetate to the system in the seed polymerization step (A) [downstream process of the seed polymerization step (A)]; or a process carried out during the seed polymerization step (A) [process carried out during the seed polymerization step (A)]. Thus, the above-mentioned advantages can be obtained by carrying out the additional monomer feeding step (B) as an upstream process or downstream process of the seed polymerization step (A) or carrying out the additional monomer feeding step (B) during the seed polymerization step (A).

The phrase "carrying out the additional monomer feeding step (B) as an upstream process of the seed polymerization step (A)" means that the polymerizable unsaturated monomer for seed polymerization is fed to the system before vinyl acetate is fed to the system and seed polymerization is carried out, as described above. In this case, the feeding of the polymerizable unsaturated monomer for seed polymerization can be carried out in the presence of or in the absence of a polymerization initiator. Specifically, the polymerization of the polymerizable unsaturated monomer for seed polymerization may be initiated before or at the same time with the initiation of the polymerization of vinyl acetate. Alternatively, a two-stage polymerization process may be carried out. In the two-stage polymerization process, the seed polymerization step (A) is carried out after the completion of the polymerization of the polymerizable unsaturated monomer for seed polymerization, namely, after the formation of a polymer as a result of the polymerization of the polymerizable unsaturated monomer for seed polymerization. The polymer herein is a homopolymer when the polymerizable unsaturated monomer for seed polymerization comprises one polymer, and it is a copolymer when the polymerizable unsaturated monomer for seed polymerization comprises two or more different monomers.

The phrase "carrying out the additional monomer feeding step (B) as a downstream process of the seed polymerization step (A)" means that the polymerizable unsaturated monomer for seed polymerization is fed to the system and subjected to polymerization after the completion of the feeding of vinyl acetate, as described above. In this case,

the polymerizable unsaturated monomer for seed polymerization may be fed to the system after the completion of the polymerization of vinyl acetate.

The phrase "carrying out the additional monomer feeding step (B) during the seed polymerization step (A)" means that the polymerizable unsaturated monomer for seed polymerization is fed to the system and subjected to polymerization separately from vinyl acetate during the step of feeding vinyl acetate and carrying out the seed polymerization of vinyl acetate. In this case, the polymerizable unsaturated monomer for seed polymerization can be fed to the system in any stage during the seed polymerization step (A) such as the stage of feeding vinyl acetate, the stage of feeding vinyl acetate and carrying out seed polymerization of vinyl acetate, and the stage of carrying out the seed polymerization of vinyl acetate. It is preferably fed in the first half of the seed polymerization step (A), namely, the stage of feeding vinyl acetate.

The polymerization temperature in seed polymerization of the seed polymerization step or of the seed polymerization step (A) can be appropriately set according typically to the type of the polymerization initiator. The polymerization temperature can be, but is not limited to, 60°C to 90°C and preferably 70°C to 85°C.

When the step of feeding the polymerizable unsaturated monomer for seed polymerization to the system separately from vinyl acetate as the additional monomer feeding step (B) is contained in the seed polymerization step (A), the temperature of the step (B) is as with the temperature in the seed polymerization step (A) (the polymerization temperature in the seed polymerization). In contrast, the temperature of feeding the polymerizable unsaturated monomer for seed polymerization is not specifically limited when the step of feeding the polymerizable unsaturated monomer for seed polymerization is carried out as an upstream process of the seed polymerization step (A), and the polymerization of the polymerizable unsaturated monomer for seed polymerization is initiated at the time during the seed polymerization step (A).

The polymerizable unsaturated monomer for seed polymerization, if fed to the system separately from vinyl acetate, can be any of the above-listed polymerizable unsaturated monomers for seed polymerization, of which at least one selected from acrylic esters, methacrylic esters, vinyl esters, and vinyl ethers is preferably used. Typically preferred polymerizable unsaturated monomers for seed polymerization are (meth)acrylic acid alkyl esters such as (meth) acrylic acid $C_{1-18}$ alkyl esters, of which (meth) acrylic acid $C_{1-14}$ alkyl esters are more preferred; and vinyl esters of $C_{3-14}$ aliphatic carboxylic acids. Because these monomers effectively prevent the low-temperature bond strength from decreasing after aging or curing at low temperatures. Among them, acrylic acid $C_{3-12}$ alkyl esters and methacrylic acid $C_{2-8}$ alkyl esters are further preferred as the polymerizable unsaturated monomer for seed polymerization for maintaining excellent low-temperature film formability (low-temperature film-forming performance) in addition to the low-temperature bond strength.

The amount of the polymerizable unsaturated monomer for seed polymerization, if fed to the system separately from vinyl acetate, can be selected within ranges not adversely affecting the performance of the PVAc emulsion such as adhesiveness. It is generally 0.05 to 10 parts by mass to 100 parts by mass of vinyl acetate. If the amount is less than 0.05 parts by mass, the bond strength after aging at low temperatures (low-temperature bond strength) may frequently decrease. In contrast, if it exceeds 10 parts by mass, the dry strength may frequently decrease. Of the above-specified range, the amount of the polymerizable unsaturated monomer for seed polymerization is preferably 0.1 to 7 parts by mass and more preferably 0.5 to 4 parts by mass to 100 parts by mass of vinyl acetate, for more excellent bond strength and less decrease in low-temperature bond strength after aging at low temperatures.

The monomer component to be subjected to seed polymerization in the present invention often comprises a monomer (monomer component) differing in composition (type) from the monomers constituting the seed polymer, or comprises a monomer (monomer component) having the same composition as, but different compositional proportions from, the monomers constituting the seed polymer.

Protective colloid may be used in the seed polymerization. The protective colloid may be used as being contained in the EVA emulsion for use in the seed polymerization of the monomer components including vinyl acetate and polymerizable unsaturated monomer for seed polymerization. Alternatively, it may be added to the monomer components including vinyl acetate and the polymerizable unsaturated monomer for seed polymerization to be fed to the EVA emulsion upon the seed polymerization of the monomer components including vinyl acetate and the polymerizable unsaturated monomer for seed polymerization. The protective colloid is not specifically limited and can be advantageously any of protective colloids such as poly(vinyl alcohol)s (PVAs), and other water-soluble polymers generally used in the production of poly(vinyl acetate) emulsions. The poly(vinyl alcohol)s herein include regular poly(vinyl alcohol)s as well as the above-mentioned 1,2-glycol-enriched PVAs and modified poly(vinyl alcohol)s such as acetoacetylated poly(vinyl alcohol)s. The poly(vinyl alcohol)s can be any of partially saponified products and fully saponified products. Two or more different poly (vinyl alcohol)s differing typically in molecular weight or degree of saponification can be used. When the seed polymerization system includes a poly(vinyl alcohol) as the protective colloid, the poly(vinyl alcohol) effectively functions as an emulsifier in the seed polymerization and serves to improve coating workability when the resulting PVAc emulsion is used as an adhesive.

The amount of the protective colloid can be appropriately selected within ranges not adversely affecting the polymerization capability in seed polymerization and the adhesiveness when the PVAc emulsion is used as an adhesive.

In general, it is, for example, 2 to 40 percent by mass, preferably 5 to 30 percent by mass, and more preferably 8 to 25 percent by mass, to the total resins (total solid contents) of the resulting poly(vinyl acetate) emulsion.

The polymerization initiator (polymerization catalyst) for use in the seed polymerization is not specifically limited and can be any of known or conventional polymerization initiators including organic peroxides such as hydrogen peroxide and benzoyl peroxide; ammonium persulfate, potassium persulfate, sodium persulfate, and azobisisobutyronitrile. These polymerization initiators may be used as redox polymerization initiators in combination with reducing agents such as tartaric acid, sodium bisulfite, and ascorbic acid. The amount of the polymerization initiator is, for example, 0.05 to 2 parts by mass to 100 parts by mass of the total of monomer components to be subjected to seed polymerization, namely to the total of vinyl acetate and the polymerizable unsaturated monomer for seed polymerization used according to necessity. The amount of the reducing agent for use in the redox polymerization initiator can be appropriately set according typically to the type of the polymerization initiator.

Other additives such as surfactants and pH adjusters may be added in the seed polymerization, within ranges not adversely affecting the polymerizability and the performances as an adhesive.

Chain-transfer agents may be used in the present invention so as to improve the transparency of the cured article or film prepared from the PVAc emulsion, of which mercapto chain-transfer agents are preferred.

The polymerization process in the emulsion polymerization can be known or conventional emulsion polymerization process. Examples thereof include, but are not limited to, a process of sequentially feeding monomers, a process of feeding monomers in one step, and a process of two-stage polymerization. The polymerization device is not specifically limited and can be, for example, an ordinary-pressure emulsion polymerization device used in the art.

[PVAc emulsion]

The PVAc emulsions according to the present invention can form cured articles or films having transparency equal to or higher than that of conventional equivalents, even without using potential VOC components such as plasticizers and high-boiling solvents. This is because the dispersing agent comprising a 1,2-glycol-enriched PVA is used in the preparation of the EVA emulsion. When plasticizers and high-boiling solvents are not used in conventional equivalents, the amount of a vinyl alcohol polymer (PVA) as a dispersing agent generally increases, and this invites decreased water resistance of the resulting cured articles or films prepared from the PVAc emulsions. However, the present invention uses not a regular PVA but a 1,2-glycol-enriched PVA, can thereby reduce the amount of the dispersing agent, i.e., the amount of the dispersing agent comprising a 1,2-glycol-enriched PVA to less than 3 parts by mass relative to 100 parts by mass of the dispersoid. Accordingly, the cured articles or films prepared from the PVAc emulsion have water resistance equal to or higher than that of conventional equivalents.

The PVAc emulsions according to the present invention can form cured articles or films having transparency equal to or higher than that of conventional equivalents even containing no plasticizers at all. In addition, the PVAc emulsions are free from or substantially free from VOC components.

The PVAc emulsions according to the present invention can exhibit high bond strength even being fully free from plasticizers. They can also excellent low-temperature bond strength even when aged at low temperatures and can prevent significant decrease in bond strength when aged at low temperatures. This is because the 1,2-glycol-enriched PVA is used as the dispersing agent in the preparation of the EVA emulsions. For example, the PVAc emulsions can have a retention expressed by the following equation of generally 60% or more, and, under some production conditions, 70% or more, or 80% or more.

$$\text{Retention (\%)} = [(\text{Low-temperature (5°C) bond strength } (N/mm^2))/(\text{Dry strength } (N/mm^2))] \times 100$$

The dry strength indicates the bond strength of the emulsion when used as a woodworking adhesive and is the compressive shear strength measured according to JIS K 6852. The low-temperature (5°C) bond strength indicates the bond strength of the emulsion when used as a woodworking adhesive and is the compressive shear strength measured according to JIS K 6852, except that the emulsion and a test piece are kept in an atmosphere of 5°C for one day, are bonded and aged at 5°C, and the measurement of the compressive shear strength is carried out at 5°C.

The cured articles or films prepared from the PVAc emulsions according to the present invention have a dry strength of, for example, 10 $N/mm^2$ or more (e.g., 10 to 30 $N/mm^2$) and preferably 15 $N/mm^2$ or more (e.g., 15 to 30 $N/mm^2$).

The PVAc emulsions according to the present invention have a low minimum film-forming temperature and are excellent in film-formability when applied to the adhered and dried to thereby yield a film at low temperatures, such as 5°C or lower (film-formability at low temperatures). Therefore, they can form transparent cured articles or films even if

the film-formation is carried out at low temperatures. Thus, the PVAc emulsions according to the present invention have a low minimum film-forming temperature of, for example, 0°C or lower and can form cured articles or films that exhibit satisfactory transparency even at low temperatures.

The PVAc emulsions according to the present invention can have a small average particle diameter of emulsion particles in the PVAc emulsions, because the amount of the dispersing agent, typically of the 1,2-glycol-enriched PVA, used in the preparation of the EVA emulsions is small. The average particle diameter of the PVAc emulsions can be, for example, 3.5 μm or less, preferably 1.0 to 3.5 μm, more preferably 1.0 to 3.1 μm, and further preferably 1.0 to 2.5 μm.

The coefficient of variation (CV) indicating the variance of particle size distribution of emulsion particles in the PVAc emulsions is preferably 1.3 or less and more preferably 1.2 or less, wherein CV equals [(85% particle diameter)-(15% particle diameter)]/(50% particle diameter).

The average particle diameter and the coefficient of variation (CV) of the PVAc emulsions can be determined in the same way as in the average particle diameter and the coefficient of variation (CV) of the EVA emulsions. Specifically, the average particle diameter and coefficient of variation (CV) of the PVAC emulsions can be determined using the laser diffraction/scattering particle size distribution analyzer LA-500 [HORIBA, Ltd.] with a light source of He-Ne laser at a wavelength of 632.8 nm according to the following procedures (1) to (4). The average particle diameter of the EVA emulsion to be measured is by volume.

(1) The PVAc emulsion (0.5 g) is weighed in a beaker, is combined with 10 g of distilled water, is stirred with a glass rod, and thereby yields a dispersion.
(2) The dispersion is placed in a circulation tank so as to have a concentration within an appropriate range for the analyzer so as to have a transmittance of 70% to 90%.
(3) The dispersion is dispersed for one minute with ultrasound at 39 KHz and 40 W, and the particle diameters (volume basis) of emulsion particles in the PVAc emulsion are measured.
(4) The average particle diameter and the coefficient of variation (CV) indicating the variance of the particle size distribution of the emulsion particles in the PVAc emulsion are determined by calculation from a graph indicating particle size distribution on the volume fraction basis. Initially, the 15% particle diameter, 50% particle diameter, and 85% particle diameter are read out from the graph indicating particle size distribution with the abscissa indicating the particle diameter and the ordinate indicating the frequency. The 15% particle diameter refers to the particle diameter at which the volume fraction frequency reaches 15% when the volume fraction frequency is integrated in ascending particle diameter order. Likewise, the 50% particle diameter and the 85% particle diameter refer to the particle diameters at which the volume fraction frequency reaches 50% and 85%, respectively, when the volume fraction frequency is integrated in ascending particle diameter order. The 50% particle diameter is the average particle diameter. Next, the coefficient of variation (CV) is determined by calculation according to following Formula (iii). The smaller the coefficient of variation (CV) is, the sharper the particle size distribution is.

Coefficient of variation (CV) = [(85% particle diameter)-(15% particle diameter)]/(50% particle diameter

(iii)

In addition, the PVAc emulsions according to the present invention are suppressed or prevented from increasing in viscosity even at low temperatures. Specifically, the PVAc emulsions according to the present invention can have a ratio of the viscosity at low temperatures to the viscosity at ordinary temperature (23°C) (low-temperature viscosity increase) is 4.0 or less, preferably 3.5 or less, and more preferably 3.0 or less. The low-temperature viscosity increase of the PVAc emulsions is determined in the following manner. Initially, a sample is stirred with a glass rod in an atmosphere at 23°C for about one minute while avoiding foaming, the viscosity of the sample is measured with a BH viscometer rotor No. 7 at 10 rpm, and this viscosity is defined as the "initial viscosity". The sample is then stored in a thermo-hygrostat (Sanyo Electric Co., Ltd., Model "MPR-161D(H)") set at 2°C for seven days. During this procedure, the temperature of the sample (2°C) is monitored with an alcohol-in-glass thermometer. The viscosity of the sample is then measured without stirring at 2°C and 60% relative humidity (RH) with a BH viscometer with rooter No. 7 at 10 rpm, and this viscosity is defined as the "low-temperature static viscosity". The low-temperature viscosity increase (time) is determined according to following Formula (iv):

$$\text{Low-temperature viscosity increase (time)} = (\text{Low-temperature static viscosity})/(\text{Initial viscosity}) \quad \text{(iv)}$$

The PVAc emulsions according to the present invention can form cured articles or films having satisfactory transparency and contain no or substantially no VOC components, i.e., are substantially free from VOC components. Thus, they are suitable as active ingredients of various treating agents such as aqueous adhesives, aqueous paints, and aqueous coating agents.

The volatile organic compounds (VOCs) used in the present invention refer to chemical substances defined by World Health Organization (WHO). Specifically, the VOC components refer to chemical substances having boiling points of "50-100°C" to "240-260°C", namely, chemical substances having lower limits of boiling points of 50°C to 100°C and upper limits of boiling points of 240°C to 260°C. The phrase "substantially free from VOC components" means that the contamination of VOC components such as plasticizers into the PVAc emulsions according to the present invention is not excluded, which VOC components are derived from, for example, pigment pastes to be added and inevitably contaminate the emulsions.

The PVAc emulsions according to the present invention can be used as intact as various treating agents such as aqueous adhesives, aqueous paints, and aqueous coating agents but may be used as various treating agents as mixtures with other polymer emulsions according to necessity. Examples of the other polymer emulsions are other poly (vinyl acetate) emulsions, ethylene-poly(vinyl acetate) emulsions, and acrylic resin emulsions.

The PVAc emulsions according to the present invention may further comprise other components such as tackifiers including water-soluble polymers such as cellulose derivatives; fillers; solvents; pigments; dyestuffs; preservatives; antifoaming agents; suspension stabilizers; flowability improvers; rust inhibitors; wetting agents; crosslinking agents such as isocyanate crosslinking agents, epoxy crosslinking agents, carbodiimide crosslinking agents, aziridine crosslinking agents, polyethyleneimine crosslinking agents, and melamine crosslinking agents; age resistors or antioxidants; ultraviolet absorbers; antioxidants; and flavors. The water resistance can be improved by using crosslinking agents. Aqueous adhesives according to a preferred embodiment of the present invention contain substantially no plasticizers (volatile plasticizers). The phrase "contain substantially no plasticizers" means that the contamination of plasticizers into the adhesives is not excluded, which plasticizers are derived from, for example, pigment pastes to be added to the adhesives. The total amount of resins contained in the aqueous adhesives is, for example, 20 to 80 percent by mass and preferably 30 to 65 percent by mass in terms of solid contents (nonvolatile contents).

The PVAc emulsions according to the present invention can be very safe adhesives as "non-VOC aqueous adhesives" typically not only in industrial use, but also in schoolchildren use and medical use. The PVAc emulsions according to the present invention can be used in many applications such as adhesives, base materials for paints, and coating agents, as described above.

[EXAMPLES]

The present invention will be illustrated in more detail with reference to several examples below, which by no means limit the scope of the present invention.

(EVA Emulsion Preparation Example 1)

In a pressure-tight 50-liter autoclave equipped with a nitrogen-blowing inlet, a thermometer, and a stirrer were placed 657 g of a vinyl alcohol polymer [having a degree of saponification of 88.0 percent by mole, a viscosity-average molecular weight of 1700, and a ratio of 1,2-glycol bonds to the total of vinyl alcohol units and vinyl acetate units as monomer units (ratio of 1,2-dihydroxyethylene units) of 2.2 percent by mole; hereinafter also referred to as "PVA-1"], 21564 g of ion-exchanged water, 24.1 g of sodium acetate, and 0.37 g of ferric sulfate. The mixture was stirred at 95°C for one hour to thereby completely dissolve the vinyl alcohol polymer. The mixture was cooled to 60°C, was combined with 23000 g of vinyl acetate and 115 g of n-dodecylmercaptan, and nitrogen purge of the system was carried out while stirring the system. After the completion of nitrogen purge, 940 g of a 10 percent by mass aqueous solution of L-ascorbic acid was added, and ethylene gas pressurized to 45 kg/$cm^2$ was introduced into the system. Thereafter, 1200 g of a 0.8 percent by mass aqueous solution of hydrogen peroxide was introduced under pressure over five hours, and emulsion polymerization was conducted. After the completion of addition of the 0.8 percent by mass aqueous solution of hydrogen peroxide, 470 g of a 4.5 percent by mass aqueous solution of hydrogen peroxide was introduced under pressure, and the polymerization was completed. After the completion of the polymerization, the reaction mixture was cooled, was filtrated through a 60-mesh stainless steel mesh, and thereby yielded an ethylene-vinyl acetate copolymer emulsion

having a solid content of 55 percent by mass.

The vinyl alcohol polymer used as the dispersing agent in the above-prepared ethylene-vinyl acetate copolymer emulsion is PVA-1, namely, a vinyl alcohol polymer comprising 1.9 percent by mole or more of the unit represented by Formula (1) to the total of vinyl alcohol units in a polymer chain after saponification to a degree of saponification of 99 percent by mole or more. The PVA-1 was used in an amount of 2.3 parts by mass to 100 parts by mass of the ethylene-vinyl acetate copolymer as the dispersoid. The ethylene-vinyl acetate copolymer contains 20 percent by mass of ethylene units to the total monomer units.

The ethylene-vinyl acetate copolymer emulsion has an average particle diameter of emulsion particles of 1.7 μm and a coefficient of variation (CV) of 0.91, wherein the coefficient of variation indicates the variance of particle size distribution of the emulsion particles and is expressed by the formula: CV = [(85% particle diameter)-(15% particle diameter)]/(50% particle diameter). The average particle diameter of the emulsion particles and the coefficient of variation (CV) indicating the variance of particle size distribution of the emulsion particles were determined in the above-mentioned manner, wherein CV is expressed by the formula: CV = [(85% particle diameter)-(15% particle diameter)]/(50% particle diameter).

(EVA Emulsion Preparation Example 2)

An ethylene-vinyl acetate copolymer emulsion having a solid content of 55 percent by mass was prepared by the procedure of EVA Emulsion Preparation Example 1, except for using 545.1 g of a vinyl alcohol polymer [having a degree of saponification of 88.0 percent by mole, a viscosity-average molecular weight of 500, and a ratio of 1,2-glycol bonds (ratio of 1,2-dihydroxyethylene units) to the total of vinyl alcohol units and vinyl acetate units as monomer units of 2.4 percent by mole; hereinafter also referred to as "PVA-2"] as a vinyl alcohol polymer.

The vinyl alcohol polymer used as the dispersing agent in the above-prepared ethylene-vinyl acetate copolymer emulsion is PVA-2, namely, a vinyl alcohol polymer comprising 1.9 percent by mole or more of the unit represented by Formula (1), to the total of vinyl alcohol units in a polymer chain after saponification to a degree of saponification of 99 percent by mole or more. The PVA-2 was used in an amount of 1.9 parts by mass to 100 parts by mass of the ethylene-vinyl acetate copolymer as the dispersoid. The ethylene-vinyl acetate copolymer contains 20 percent by mass of ethylene units to the total monomer units.

The ethylene-vinyl acetate copolymer emulsion has an average particle diameter of emulsion particles of 2.2 μm and a coefficient of variation (CV) of 1.00, wherein the coefficient of variation indicates the variance of particle size distribution of the emulsion particles and is expressed by the formula: CV = [(85% particle diameter)-(15% particle diameter)]/(50% particle diameter).

(EVA Emulsion Preparation Example 3)

An ethylene-vinyl acetate copolymer emulsion having a solid content of 55 percent by mass was prepared by the procedure of EVA Emulsion Preparation Example 1, except for using 803.3 g of PVA-1 as the vinyl alcohol polymer.

The PVA-1 was used as the dispersing agent in the above-prepared ethylene-vinyl acetate copolymer emulsion in an amount of 2.8 parts by mass to 100 parts by mass of the ethylene-vinyl acetate copolymer as the dispersoid. The ethylene-vinyl acetate copolymer contains 20 percent by mass of ethylene units to the total monomer units. The ethylene-vinyl acetate copolymer emulsion has an average particle diameter of emulsion particles of 1.2 μm and a coefficient of variation (CV) of 0.95, wherein the coefficient of variation indicates the variance of particle size distribution of the emulsion particles and is expressed by the formula: CV = [(85% particle diameter)-(15% particle diameter)]/(50% particle diameter).

(EVA Emulsion Preparation Example 4)

An ethylene-vinyl acetate copolymer emulsion having a solid content of 55 percent by mass was prepared by the procedure of EVA Emulsion Preparation Example 1, except for setting the pressure upon introduction of ethylene at 40 $kg/cm^2$ instead of 45 $kg/cm^2$.

The PVA-1 was used as the dispersing agent in the above-prepared ethylene-vinyl acetate copolymer emulsion in an amount of 2.34 parts by mass to 100 parts by mass of the ethylene-vinyl acetate copolymer as the dispersoid. The ethylene-vinyl acetate copolymer contains 18 percent by mass of ethylene units to the total monomer units. The ethylene-vinyl acetate copolymer emulsion has an average particle diameter of emulsion particles of 1.6 μm and a coefficient of variation (CV) of 0.90, wherein the coefficient of variation indicates the variance of particle size distribution of the emulsion particles and is expressed by the formula: CV = [(85% particle diameter)-(15% particle diameter)]/(50% particle diameter).

(EVA Emulsion Preparation Example 5)

An ethylene-vinyl acetate copolymer emulsion having a solid content of 55 percent by mass was prepared by the procedure of EVA Emulsion Preparation Example 1, except for setting the pressure upon introduction of ethylene at 50 $kg/cm^2$ instead of 45 $kg/cm^2$.

The PVA-1 was used as the dispersing agent in the above-prepared ethylene-vinyl acetate copolymer emulsion in an amount of 2.20 parts by mass to 100 parts by mass of the ethylene-vinyl acetate copolymer as the dispersoid. The ethylene-vinyl acetate copolymer contains 23 percent by mass of ethylene units to the total monomer units. The ethylene-vinyl acetate copolymer emulsion has an average particle diameter of emulsion particles of 2.0 μm and a coefficient of variation (CV) of 1.05, wherein the coefficient of variation indicates the variance of particle size distribution of the emulsion particles and is expressed by the formula: CV = [(85% particle diameter)-(15% particle diameter)]/(50% particle diameter).

(EVA Emulsion Preparation Example 6)

An attempt was made to prepare an ethylene-vinyl acetate copolymer emulsion having a solid content of 55 percent by mass by the procedure of EVA Emulsion Preparation Example 1, except for using 545.1 g of a vinyl alcohol polymer [having a degree of saponification of 88.0 percent by mole, a viscosity-average molecular weight of 1700, and a ratio of 1,2-glycol bonds to the total of vinyl alcohol units and vinyl acetate units as monomer units (ratio of 1,2-dihydroxyethylene units) of 1.6 percent by mole; hereinafter also referred to as "PVA-3"] as the vinyl alcohol polymer, but failed to prepare a stably dispersed ethylene-vinyl acetate copolymer emulsion. The PVA-3 as the dispersing agent was used in an amount of 2.3 parts by mass to 100 parts by mass of the ethylene-vinyl acetate copolymer as the dispersoid.

(EVA Emulsion Preparation Example 7)

An ethylene-vinyl acetate copolymer emulsion having a solid content of 55 percent by mass was prepared by the procedure of EVA Emulsion Preparation Example 1, except for using 1004.2 g of PVA-1 as the vinyl alcohol polymer.

The PVA-1 was used as the dispersing agent in the above-prepared ethylene-vinyl acetate copolymer emulsion in an amount of 3.5 parts by mass to 100 parts by mass of the ethylene-vinyl acetate copolymer as the dispersoid. The ethylene-vinyl acetate copolymer contains 20 percent by mass of ethylene units to the total monomer units. The ethylene-vinyl acetate copolymer emulsion has an average particle diameter of emulsion particles of 0.9 μm and a coefficient of variation (CV) of 1.45, wherein the coefficient of variation indicates the variance of particle size distribution of the emulsion particles and is expressed by the formula: CV = [(85% particle diameter)-(15% particle diameter)]/(50% particle diameter).

(EVA Emulsion Preparation Example 8)

An ethylene-vinyl acetate copolymer emulsion having a solid content of 55 percent by mass was prepared by the procedure of EVA Emulsion Preparation Example 1, except for using 1004.2 g of PVA-3.

The PVA-1 was used as the dispersing agent in the above-prepared ethylene-vinyl acetate copolymer emulsion in an amount of 3.5 parts by mass to 100 parts by mass of the ethylene-vinyl acetate copolymer as the dispersoid. The ethylene-vinyl acetate copolymer contains 20 percent by mass of ethylene units to the total monomer units. The ethylene-vinyl acetate copolymer emulsion has an average particle diameter of emulsion particles of 1.2 μm and a coefficient of variation (CV) of 1.40, wherein the coefficient of variation indicates the variance of particle size distribution of the emulsion particles and is expressed by the formula: CV = [(85% particle diameter)-(15% particle diameter)]/(50% particle diameter).

(Example 1)

In a reactor equipped with a stirrer, a reflux condenser, dropping tanks, and a thermometer was placed 505 parts by mass of water. In the water were dissolved 55 parts by mass of a poly(vinyl alcohol) (PVA) under the trade name of "Kuraray POVAL 224" (Kuraray Co., Ltd.; hereinafter also referred to as "PVA-4") and 0.7 part by mass of tartaric acid, and the mixture was held to 80°C. After PVA was fully dissolved, the solution was combined with 160 parts by mass of the ethylene-vinyl acetate copolymer emulsion prepared according to EVA Emulsion Preparation Example 1. From the time when the liquid temperature reached 80°C, a catalyst (an aqueous solution containing 0.5 part by mass of 35 percent by mass of hydrogen peroxide solution in 20 parts by mass of water) and 285 parts by mass of vinyl acetate monomer were continuously added dropwise from different dropping tanks over two hours. After the completion of dropwise addition, the mixture was further stirred for one and a half hours to complete the polymerization to thereby yield a poly(vinyl acetate) emulsion.

The poly(vinyl acetate) emulsion has an average particle diameter of emulsion particles of 2.2 μm and a coefficient of variation (CV) of 1.00, wherein the coefficient of variation indicates the variance of particle size distribution

of the emulsion particles and is expressed by the formula: CV = [(85% particle diameter)-(15% particle diameter)]/(50% particle diameter). The average particle diameter of emulsion particles and the coefficient of variation (CV) in the vinyl resin emulsion were determined in the same manner as above.

(Example 2)

A poly(vinyl acetate) emulsion was prepared by the procedure of Example 1, except for using the ethylene-vinyl acetate copolymer emulsion prepared according to EVA Emulsion Preparation Example 2 as the ethylene-vinyl acetate copolymer emulsion. The poly(vinyl acetate) emulsion has an average particle diameter of emulsion particles of 3.1 μm and a coefficient of variation (CV) of 1.30, wherein the coefficient of variation indicates the variance of particle size distribution of the emulsion particles and is expressed by the formula: CV = [(85% particle diameter)-(15% particle diameter)]/(50% particle diameter).

(Example 3)

A poly(vinyl acetate) emulsion was prepared by the procedure of Example 1, except for using the ethylene-vinyl acetate copolymer emulsion prepared according to EVA Emulsion Preparation Example 3 as the ethylene-vinyl acetate copolymer emulsion. The poly(vinyl acetate) emulsion has an average particle diameter of emulsion particles of 2.1 μm and a coefficient of variation (CV) of 1.20, wherein the coefficient of variation indicates the variance of particle size distribution of the emulsion particles and is expressed by the formula: CV = [(85% particle diameter)-(15% particle diameter)]/(50% particle diameter).

(Example 4)

A poly(vinyl acetate) emulsion was prepared by the procedure of Example 1, except for using the ethylene-vinyl acetate copolymer emulsion prepared according to Preparation Example 4 of EVA emulsion as the ethylene-vinyl acetate copolymer emulsion. The poly(vinyl acetate) emulsion has an average particle diameter of emulsion particles of 2.0 μm and a coefficient of variation (CV) of 0.90, wherein the coefficient of variation indicates the variance of particle size distribution of the emulsion particles and is expressed by the formula: CV = [(85% particle diameter)-(15% particle diameter)]/(50% particle diameter).

(Example 5)

A poly(vinyl acetate) emulsion was prepared by the procedure of Example 1, except for using the ethylene-vinyl acetate copolymer emulsion prepared according to EVA Emulsion Preparation Example 5 as the ethylene-vinyl acetate copolymer emulsion. The poly(vinyl acetate) emulsion has an average particle diameter of emulsion particles of 2.4 μm and a coefficient of variation (CV) of 1.10, wherein the coefficient of variation indicates the variance of particle size distribution of the emulsion particles and is expressed by the formula: CV = [(85% particle diameter)-(15% particle diameter)]/(50% particle diameter).

(Example 6)

In a reactor equipped with a stirrer, a reflux condenser, dropping tanks, and a thermometer was placed 505 parts by mass of water. In the water were dissolved 55 parts by mass of a poly(vinyl alcohol) (PVA) under the trade name of "Kuraray POVAL 224" (Kuraray Co., Ltd.; "PVA-4"] and 0.7 part by mass of tartaric acid, and the mixture was held to 80°C. After PVA was fully dissolved, the solution was combined with 160 parts by mass of the ethylene-vinyl acetate copolymer emulsion prepared according to EVA Emulsion Preparation Example 1. At the time when the liquid temperature reached 80°C, 6 parts by mass of n-butyl acrylate (BA) as added, and the mixture was stirred for five minutes. To the mixture were continuously added dropwise a catalyst (an aqueous solution containing 0.5 part by mass of 35 percent by mass of hydrogen peroxide solution in 20 parts by mass of water) and 285 parts by mass of vinyl acetate monomer from different dropping tanks over two hours. After the completion of dropwise addition, the mixture was further stirred for one and a half hours to complete the polymerization to thereby yield a poly(vinyl acetate) emulsion.

The poly(vinyl acetate) emulsion has an average particle diameter of emulsion particles of 2.3 μm and a coefficient of variation (CV) of 0.90, wherein the coefficient of variation indicates the variance of particle size distribution of the emulsion particles and is expressed by the formula: CV = [(85% particle diameter)-(15% particle diameter)]/(50% particle diameter).

(Comparative Example 1)

A poly(vinyl acetate) emulsion was prepared by the procedure of Example 1, except for using the ethylene-vinyl acetate copolymer emulsion prepared according to EVA Emulsion Preparation Example 7 as the ethylene-vinyl acetate copolymer emulsion. The poly(vinyl acetate) emulsion has an average particle diameter of emulsion particles of 2.5 μm and a coefficient of variation (CV) of 1.20, wherein the coefficient of variation indicates the variance of particle size distribution of the emulsion particles and is expressed by the formula: CV = [(85% particle diameter)-(15% particle diameter)]/(50% particle diameter).

(Comparative Example 2)

A poly(vinyl acetate) emulsion was prepared by the procedure of Example 1, except for using the ethylene-vinyl acetate copolymer emulsion prepared according to EVA Emulsion Preparation Example 8 as the ethylene-vinyl acetate copolymer emulsion. The poly(vinyl acetate) emulsion has an average particle diameter of emulsion particles of 3.6 μm and a coefficient of variation (CV) of 1.50, wherein the coefficient of variation indicates the variance of particle size distribution of the emulsion particles and is expressed by the formula: CV = [(85% particle diameter)-(15% particle diameter)]/(50% particle diameter).

(Comparative Example 3)

In a reactor equipped with a stirrer, a reflux condenser, dropping tanks, and a thermometer was placed 505 parts by mass of water. In the water were dissolved 55 parts by mass of PVA-1 as the poly(vinyl alcohol) (PVA), and 0.7 part by mass of tartaric acid, and the mixture was held to 80°C. After PVA was fully dissolved, the solution was combined with 160 parts by mass of the ethylene-vinyl acetate copolymer emulsion prepared according to EVA Emulsion Preparation Example 8. From the time when the liquid temperature reached 80°C, a catalyst (an aqueous solution containing 0.5 part by mass of 35 percent by mass of hydrogen peroxide solution in 20 parts by mass of water) and 285 parts by mass of vinyl acetate monomer were continuously added dropwise from different dropping tanks over two hours. After the completion of dropwise addition, the mixture was further stirred for one and a half hours to complete the polymerization to thereby yield a poly(vinyl acetate) emulsion.

The poly(vinyl acetate) emulsion has an average particle diameter of emulsion particles of 3.5 μm and a coefficient of variation (CV) of 1.3, wherein the coefficient of variation indicates the variance of particle size distribution of the emulsion particles and is expressed by the formula: CV = [(85% particle diameter)-(15% particle diameter)]/(50% particle diameter).

(Evaluation)

The minimum film-forming temperature, low-temperature film formability, viscosity, adhesive performance (dry strength and low-temperature bond strength), and low-temperature viscosity increase of the poly(vinyl acetate) emulsions prepared according to Examples and Comparative Examples were determined or evaluated by the following methods. The results are shown in Table 1.

(Determination method of minimum film-forming temperature)

The minimum film-forming temperature was determined according to JIS K 6804 (7.6 "Minimum film-forming temperature") using a film-forming tester (the product of Riken Seiki Seisakusho under the trade name of "M.F.T. Tester"; Model "LT").

(Evaluation of low-temperature film formability)

A thermo-hygrostat (the product of Espec Corporation, Model "LHU-112 T") was adjusted to 2°C, and each of the samples (the poly(vinyl acetate) emulsions prepared according to Examples and Comparative Examples), a glass plate, and a glass rod were stored therein for seven days. The temperature of each sample was measured with an alcohol-in-glass thermometer to find to be 2°C. The surface temperature of the glass plate was determined with a surface thermometer (the product of SATO KEIRYOKI MFG. CO., LTD., Model "SK-1250 MC") and was found to be 2°C. Each of the samples was applied to the surface of the glass plate having a surface temperature of 2°C in an atmosphere at 2°C and 60% relative humidity (RH) using the glass rod (2°C) in such an amount as to yield a thickness after drying of 50 μm, was aged in the same atmosphere for one day, and thereby yielded films. The transparency of the films was visually observed, and the low-temperature film formability of the samples was evaluated according to the following

criteria.

Good: The dried film is fully or substantially fully transparent.
Fair: The dried film has clear turbidity.
Failure: The dried film is fully opaque.

(Viscosity)

The viscosity was determined using a BH viscometer with a rotor No. 6 at a rate of 10 rpm at 23°C.

(Evaluation of adhesive performance)

The adhesive performances of the poly(vinyl acetate) emulsions prepared according to Examples and Comparative Examples were evaluated by measuring bond strengths including dry strength, low-temperature bond strength, heat-resistant bond strength, and water-resistant bond strength by the following determination methods.

(1) Determination method of dry strength

The poly(vinyl acetate) emulsions prepared according to Examples and Comparative Examples were used as woodworking adhesives, and compressive shear strengths thereof were measured according to JIS K 6852. The combination of two plies of birch was used as test pieces. The rupture (breakage) of the adherend was determined, and the ratio of the broken area to the shearing area was defined as the percentage of material failure (%). Specifically, a sample was applied to two sides of the test pieces in an amount of 100 $g/m^2$ in one side and 200 $g/m^2$ in both sides, and the two test pieces were stacked at a clamping pressure of 1 MPa, were aged in an atmosphere of 23°C and 50% RH for twenty-four hours, the pressure was removed, and the test pieces were further aged in an atmosphere of 23°C and 50% RH for forty-eight hours. Thus, the test pieces were bonded. The compressive shear strength of the bonded test pieces was determined in an atmosphere of 23°C and 50% RH according to JIS K 6852.
The rupture (breakage) of the adherend was observed, and the ratio of the broken area to the shear area was defined as the percentage of material failure (%).

(2) Determination method of low-temperature bond strength

The low-temperature bond strength was determined by the procedure of the determination of the dry strength, except that the poly(vinyl acetate) emulsions prepared according to Examples and Comparative Examples, and the test pieces were cooled by leaving stand in an atmosphere at 5°C, were bonded and cured in an atmosphere at 5°C, and the compressive shear strengths were measured in an atmosphere at 5°C. The rupture (breakage) of the adherend was observed, and the ratio of the broken area to the shear area was defined as the percentage of material failure (%). Specifically, each of the poly(vinyl acetate) emulsions prepared according to Examples and Comparative Examples, and the test piece were stored in a thermostat at 5°C for one day, the sample adhesive was applied to both surfaces of the test piece in an amount of 100 $g/m^2$ in one side and 200 $g/m^2$ in both sides, and the two test pieces were stacked at a clamping pressure of 1 MPa, were cured in an atmosphere of 5°C for twenty-four hours, the pressure was removed, and the test pieces were further cured in an atmosphere of 5°C for forty-eight hours. Thus, the test pieces were bonded. The compressive shear strength of the bonded test pieces was determined in an atmosphere of 5°C according to JIS K 6852.
The rupture (breakage) of the adherend was observed, and the ratio of the broken area to the shear area was defined as the percentage of material failure (%).

(Determination method of low-temperature viscosity increase)

Initially, a sample (each of the poly(vinyl acetate) emulsions prepared according to Examples and Comparative Examples) was stirred with a glass rod in an atmosphere at 23°C for about one minute while avoiding foaming, the viscosity of the sample was measured with a BH viscometer rotor No. 7 at 10 rpm, and this viscosity was defined as the "initial viscosity".
The sample was then stored in a thermo-hygrostat (Sanyo Electric Co., Ltd., Model "MPR-161D(H)") set at 2°C for seven days. During this procedure, the temperature of the sample (2°C) was monitored with an alcohol-in-glass thermometer. The viscosity of the sample was then measured without stirring at 2°C and 60% relative humidity (RH) with a BH viscometer with rotor No. 7 at 10 rpm, and this viscosity was defined as the "low-temperature static viscosity".
The low-temperature viscosity increase (time) was determined according to following Formula (iv):

Viscosity increasing ratio at low temperatures (time) = (Low-temperature static viscosity)/(Initial viscosity) (iv)

Table 1

| | | Examples | | | | | | Comparative Examples | | |
|---|---|---|---|---|---|---|---|---|---|---|
| | | 1 | 2 | 3 | 4 | 5 | 6 | 1 | 2 | 3 |
| Composition | Water | 505 | 505 | 505 | 505 | 505 | 505 | 505 | 505 | 505 |
| | Tartaric acid | 0.7 | 0.7 | 0.7 | 0.7 | 0.7 | 0.7 | 0.7 | 0.7 | 0.7 |
| | PVA-4 | 55 | 55 | 55 | 55 | 55 | 55 | 55 | 55 | |
| | PVA-1 | | | | | | | | | 55 |
| | Seed emulsion 1 | 160 | | | | | 160 | | | |
| | Seed emulsion 2 | | 160 | | | | | | | |
| | Seed emulsion 3 | | | 160 | | | | | | |
| | Seed emulsion 4 | | | | 160 | | | | | |
| | Seed emulsion 5 | | | | | 160 | | | | |
| | Seed emulsion 7 | | | | | | | 160 | | |
| | Seed emulsion 8 | | | | | | | | 160 | 160 |
| | n-Butyl acrylate | | | | | | 6 | | | |
| | Vinyl acetate | 285 | 285 | 285 | 285 | 285 | 285 | 285 | 285 | 285 |
| Minimum film-forming temperature (°C) | | Lower than 0°C | | | | | | 2 | 6 | 8 |
| Low-temperature film formability | | Good | Good | Good | Good | Good | Good | Failure | Failure | Failure |
| Viscosity (Pa.s) | | 50 | 48 | 50 | 47 | 52 | 48 | 50 | 55 | 10 |
| Nonvolatile content (%) | | 42 | 42 | 42 | 42 | 42 | 42 | 42 | 42 | 42 |
| Adhesive performance | | | | | | | | | | |

(continued)

| | | Examples | | | | | | Comparative Examples | | |
|---|---|---|---|---|---|---|---|---|---|---|
| | | 1 | 2 | 3 | 4 | 5 | 6 | 1 | 2 | 3 |
| | Dry strength ($N/mm^2$) | 230 | 240 | 235 | 240 | 230 | 250 | 230 | 240 | 80 |
| | Percentage of material failure (%) | 50 | 50 | 50 | 50 | 40 | 50 | 50 | 50 | 0 |
| | Low-temperature bond strength ($N/mm^2$) | 120 | 120 | 125 | 130 | 120 | 230 | 100 | 40 | 20 |
| | Percentage of material failure (%) | 30 | 20 | 30 | 30 | 20 | 30 | 10 | 0 | 0 |
| Low-temperature viscosity increase (time) | | 2.8 | 2.9 | 3.5 | 2.8 | 3.0 | 2.9 | 4.5 | 5.0 | 3.2 |
| Average particle diameter ($\mu m$) | | 2.2 | 3.1 | 2.1 | 2.0 | 2.4 | 2.3 | 2.5 | 3.6 | 3.5 |
| CV | | 1.0 | 1.3 | 1.2 | 0.9 | 1.1 | 0.9 | 1.2 | 1.5 | 1.3 |

EVA Emulsion Preparation Examples 1 to 8 verify that satisfactorily and stably dispersed ethylene-vinyl acetate copolymer emulsions can be prepared by using, as the vinyl alcohol polymer, vinyl alcohol polymers each having a proportion of 1,2-glycol bonds of 1.9 percent by mole or more to the total of vinyl alcohol units and vinyl acetate units as monomer units even when they are used as the dispersing agent in an amount less than 3 parts by mass to 100 parts by mass of the ethylene-vinyl acetate copolymer as the dispersoid; but that such satisfactorily and stably dispersed ethylene-vinyl acetate copolymer emulsions cannot be prepared by using, as the vinyl alcohol polymer, vinyl alcohol polymers each having a proportion of 1,2-glycol bonds of less than 1.9 percent by mole to the total of vinyl alcohol units and vinyl acetate units as monomer units when they are used as the dispersing agent in an amount less than 3 parts by mass to 100 parts by mass of the ethylene-vinyl acetate copolymer as the dispersoid.

In addition, Table 1 and other results show that, when vinyl alcohol polymers are used as the dispersing agent in an amount equal to or more than 3 parts by mass to 100 parts by mass of the ethylene-vinyl acetate copolymer as the dispersoid, the resulting poly(vinyl acetate) emulsions have a minimum film-forming temperature exceeding 0°C, show decreased low-temperature film formability and an increased low-temperature viscosity increase, and thereby have deteriorated performances at low temperatures even if the vinyl alcohol polymers have a proportion of 1,2-glycol bonds of 1.9 percent by mole or more to the total of vinyl alcohol units and vinyl acetate units as monomer units.

When a vinyl alcohol polymer having a proportion of 1,2-glycol bonds of less than 1.9 percent by mole to the total of vinyl alcohol units and vinyl acetate units as monomer units is used as the vinyl alcohol polymer as the dispersing agent in an amount of 3 parts by mass or more to 100 parts by mass of the ethylene-vinyl acetate copolymer as the dispersoid, the resulting poly(vinyl acetate) emulsion prepared by using the ethylene-vinyl acetate copolymer emulsion as the seed emulsion is reduced in performances, although the ethylene-vinyl acetate copolymer emulsion is stably dispersed.

The poly(vinyl acetate) emulsions according to Examples are fully free from plasticizers, do not use high-boiling solvents, and are substantially free from VOC components excluding residual monomers.

The poly(vinyl acetate) emulsions according to Examples can form cured articles or films having satisfactory transparency and yield good performances at low temperatures even though being fully free from plasticizers, and they are free from or substantially free from VOC components.

Industrial Applicability

The poly(vinyl acetate) emulsions according to the present invention have the above-mentioned configuration, can thereby form cured articles or films having transparency equal to or higher than that of conventional equivalents

even though containing no plasticizers. In addition, they are free from or substantially free from VOC components. They are therefore useful typically as adhesives, base materials for paints, and coating agents.

## Claims

1. A poly(vinyl acetate) emulsion as a seed polymerization product of a monomer component comprising at least vinyl acetate, the seed polymerization being carried out in an ethylene-vinyl acetate copolymer emulsion, wherein the ethylene-vinyl acetate copolymer emulsion has been prepared by using a dispersing agent in an amount less than 3 parts by mass to 100 parts by mass of a dispersoid, the dispersing agent comprising a vinyl alcohol polymer comprising 1.9 percent by mole or more of a unit represented by following Formula (1) relative to the total of vinyl alcohol units in a polymer chain after saponification to a degree of saponification of 99 percent by mole or more.

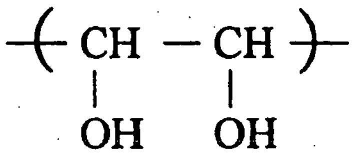

(1)

2. The poly(vinyl acetate) emulsion of Claim 1, wherein the ethylene-vinyl acetate copolymer emulsion has an average particle diameter of 1.0 to 2.5 μm measured by a method as disclosed in paragraph [54] of the description.

3. The poly(vinyl acetate) emulsion of one of Claims 1 and 2, wherein the poly(vinyl acetate) emulsion has an average particle diameter of 3.5 μm or less measured by a method as disclosed in paragraph [95] of the description.

4. The poly(vinyl acetate) emulsion of any one of Claims 1 to 3, wherein the monomer component to be subjected to the seed polymerization further comprises another polymerizable unsaturated monomer in addition to vinyl acetate.

5. A method for producing the poly(vinyl acetate) emulsion according to any one of Claims 1 to 4, comprising the step of carrying out seed polymerization of a monomer component comprising at least vinyl acetate in an ethylene-vinyl acetate copolymer emulsion, the ethylene-vinyl acetate copolymer emulsion having been prepared by using a dispersing agent in an amount less than 3 parts by mass to 100 parts by mass of a dispersoid, the dispersing agent comprising a vinyl alcohol polymer comprising 1.9 percent by mole or more of a unit represented by following Formula (1) relative to the total of vinyl alcohol units in a polymer chain after saponification to a degree of saponification of 99 percent by mole or more.

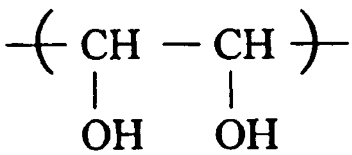

(1)

6. The method of Claim 5, wherein the monomer component to be subjected to the seed polymerization further comprises another polymerizable unsaturated monomer in addition to vinyl acetate, and wherein the step of carrying out seed polymerization comprises the steps of (A) feeding vinyl acetate to the system and carrying out seed polymerization of vinyl acetate; and (B) feeding the polymerizable unsaturated monomer to the system separately and independently from vinyl acetate.

7. An aqueous adhesive comprising a poly(vinyl acetate) emulsion, wherein the poly(vinyl acetate) emulsion is the poly(vinyl acetate) emulsion according to any one of Claims 1 to 4.

## Patentansprüche

1. Poly(vinylacetat)emulsion als ein Keimpolymerisationsprodukt einer Monomerkomponente, umfassend mindestens

Vinylacetat, wobei die Keimpolymerisation in einer Ethylen-Vinylacetatcopolymeremulsion durchgeführt wird, wobei die Ethylen-Vinylacetatcopolymeremulsion hergestellt wurde durch Verwenden eines Dispersionsmittels in einer Menge von weniger als 3 Massenteilen zu 100 Massenteilen eines Dispersoids, wobei das Dispersionsmittel ein Vinylalkoholpolymer umfasst, das 1,9 mol-% oder mehr einer Einheit umfasst, die durch folgende Formel (1) dargestellt ist, bezogen auf die Gesamtmenge von Vinylalkoholeinheiten in einer Polymerkette nach Verseifung zu einem Verseifungsgrad von 99 mol-% oder mehr.

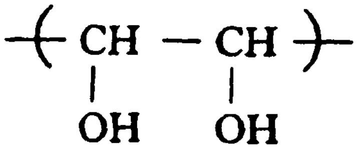

(1)

2. Die Poly(vinylacetat)emulsion nach Anspruch 1, wobei die Ethylen-Vinylacetatcopolymeremulsion einen mittleren Partikeldurchmesser von 1,0 bis 2,5 μm, gemessen durch ein Verfahren wie es in Absatz [54] der Beschreibung offenbart ist, besitzt.

3. Die Poly(vinylacetat)emulsion nach einem der Ansprüche 1 und 2, wobei die Poly(vinylacetat)emulsion einen mittleren Partikeldurchmesser von 3,5 μm oder weniger, gemessen durch ein Verfahren wie es in Absatz [95] der Beschreibung offenbart ist, besitzt.

4. Die Poly(vinylacetat)emulsion nach einem der Ansprüche 1 bis 3, wobei die Monomerkomponente, die der Keimpolymerisation unterzogen wird, weiter ein anderes, polymerisierbares, ungesättigtes Monomer zusätzlich zu Vinylacetat umfasst.

5. Verfahren zum Herstellen der Poly(vinylacetat)emulsion gemäß einem der Ansprüche 1 bis 4, umfassend den Schritt des Durchführens einer Keimpolymerisation einer Monomerkomponente, umfassend mindestens Vinylacetat, in einer Ethylen-Vinylacetatcopolymeremulsion, wobei die Ethylen-Vinylacetatcopolymeremulsion hergestellt wurde durch Verwenden eines Dispersionsmittels in einer Menge von weniger als 3 Massenteilen zu 100 Massenteilen eines Dispersoids, wobei das Dispersionsmittel ein Vinylalkoholpolymer umfasst, das 1,9 mol-% oder mehr einer Einheit umfasst, die durch folgende Formel (1) dargestellt ist, bezogen auf die Gesamtmenge von Vinylalkoholeinheiten in einer Polymerkette nach Verseifung zu einem Verseifungsgrad von 99 mol-% oder mehr.

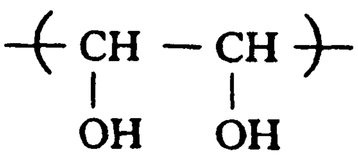

(1)

6. Das Verfahren von Anspruch 5, wobei die Monomerkomponente, die der Keimpolymerisation unterzogen wird, weiter ein anderes, polymerisierbares, ungesättigtes Monomer zusätzlich zu Vinylacetat umfasst, und wobei der Schritt des Durchführens der Keimpolymerisation die Schritte umfasst von (A) Zugeben von Vinylacetat zum System und Durchführen einer Keimpolymerisation von Vinylacetat; und (B) Zugeben des polymerisierbaren, ungesättigten Monomers zum System separat und unabhängig von Vinylacetat.

7. Wässriger Klebstoff, umfassend eine Poly(vinylacetat)emulsion, wobei die Poly(vinylacetat)emulsion die Poly(vinylacetat)emulsion gemäß einem der Ansprüche 1 bis 4 ist.

## Revendications

1. Émulsion de poly(acétate de vinyle) en tant que produit de polymérisation par germination d'un composant monomère comprenant au moins de l'acétate de vinyle, la polymérisation par germination étant réalisée dans une émulsion

de copolymère éthylène-acétate de vinyle, où l'émulsion de copolymère éthylène-acétate de vinyle a été préparée en utilisant un agent de dispersion en une quantité inférieure à 3 parties en masse par rapport à 100 parties en masse d'un dispersoïde, l'agent de dispersion comprenant un polymère d'alcool vinylique comprenant 1,9 % en mole ou plus d'une unité représentée par la formule suivante (1) par rapport au nombre total d'unités d'alcool vinylique dans une chaîne de polymère après la saponification à un degré de saponification de 99 % en mole ou plus.

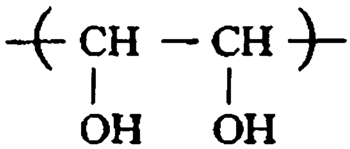

(1)

2. Émulsion de poly(acétate de vinyle) selon la revendication 1, où l'émulsion de copolymère éthylène-acétate de vinyle présente un diamètre de particule moyen de 1,0 à 2,5 µm mesuré par un procédé tel que décrit dans le paragraphe [54] de la description.

3. Émulsion de poly(acétate de vinyle) selon l'une des revendications 1 et 2, où l'émulsion de poly(acétate de vinyle) présente un diamètre de particule moyen de 3,5 µm ou moins mesuré par un procédé tel que décrit dans le paragraphe [95] de la description.

4. Émulsion de poly(acétate de vinyle) selon l'une quelconque des revendications 1 à 3, où le composant monomère devant être soumis à la polymérisation par germination comprend en outre un autre monomère insaturé polymérisable en plus de l'acétate de vinyle.

5. Procédé de production de l'émulsion de poly(acétate de vinyle) selon l'une quelconque des revendications 1 à 4, comprenant l'étape consistant à réaliser la polymérisation par germination d'un composant monomère comprenant au moins un acétate de vinyle dans une émulsion de copolymère éthylène-acétate de vinyle, l'émulsion de copolymère éthylène-acétate de vinyle ayant été préparée en utilisant un agent de dispersion en une quantité inférieure à 3 parties en masse par rapport à 100 parties en masse d'un dispersoïde, l'agent de dispersion comprenant un polymère d'alcool vinylique comprenant 1,9 % en mole ou plus d'une unité représentée par la formule suivante (1) par rapport au nombre total d'unités d'alcool vinylique dans une chaîne de polymère après saponification à un degré de saponification de 99 % en mole ou plus.

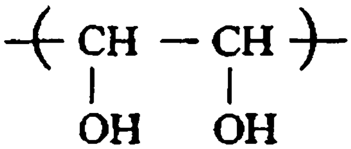

(1)

6. Procédé selon la revendication 5, où le composant monomère devant être soumis à la polymérisation par germination comprend en outre un autre monomère insaturé polymérisable en plus de l'acétate de vinyle, et où l'étape consistant à réaliser la polymérisation par germination comprend les étapes de (A) introduction de l'acétate de vinyle dans le système et réalisation de la polymérisation par germination de l'acétate de vinyle ; et (B) introduction du monomère insaturé polymérisable dans le système séparément et indépendamment de l'acétate de vinyle.

7. Adhésif aqueux comprenant une émulsion de poly(acétate de vinyle), où l'émulsion de poly(acétate de vinyle) est l'émulsion de poly(acétate de vinyle) selon l'une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI1192734 A
- JP 2000239307 A
- JP 2000302809 A
- JP 2001131206 A
- JP 2001302709 A
- JP HEI11279507 A
- JP 2001294833 A
- JP 2003176468 A
- JP 2004189891 A